# EUROPÄISCHE PATENTSCHRIFT

(11) **EP 4 665 584 B1**
(45) Veröffentlichungstag und Bekanntmachung des Hinweises auf die Patenterteilung: **16.09.2026**
(21) Anmeldenummer: 24754323.4
(22) Anmeldetag: 07.08.2024
(51) Int. Cl.: B41F 21/12, B41F 23/04, B41F 21/05, B41F 21/10, B41F 13/193, B41F 13/22, B29C 71/04, G21K 5/10, B41F 13/10, B41F 21/04

(54) **BOGENBEARBEITUNGSMASCHINE MIT KÜHLWALZE UND INSPEKTIONSEINRICHTUNG SOWIE EINE BOGENDRUCKMASCHINE MIT SIMULTAN-DOPPELDRUCKEINHEIT, AUSHÄRTEVORRICHTUNG UND KÜHLEINRICHTUNG**
SHEET PROCESSING MACHINE WITH COOLING ROLL AND INSPECTION DEVICE, AND SHEET PRINTING MACHINE WITH SIMULTANEOUS DOUBLE-PRINTING UNIT, CURING APPARATUS AND COOLING DEVICE
MACHINE DE TRAITEMENT DE FEUILLES AVEC ROULEAU DE REFROIDISSEMENT ET DISPOSITIF D'INSPECTION, ET MACHINE D'IMPRESSION DE FEUILLES AVEC UNITÉ DE DOUBLE IMPRESSION SIMULTANÉE, APPAREIL DE DURCISSEMENT ET DISPOSITIF DE REFROIDISSEMENT

(30) Priorität: 25.08.2023 DE 102023122880; 25.08.2023 DE 102023122881
(43) Veröffentlichungstag der Anmeldung: 24.12.2025
(73) Patentinhaber: Koenig & Bauer AG, 97080 Würzburg (DE)
(72) Erfinder: BAUER, Stefan, 97291 Thüngersheim (DE); DIEHM, Tobias, 97877 Wertheim (DE); KRESS, Patrick, 97980 Bad Mergentheim-Edelfingen (DE); LANTERNIER, Jean-Baptiste, 74500 Neuvecelle (FR); SCHWEERS, Johannes, 33415 Verl (DE); SZCZUKIEWICZ, Sylwia, 2024 Saint-Aubin-Sauges (CH); TÜRKE, Thomas, 1027 Lonay (CH)
(74) Vertreter: Koenig & Bauer AG
(86) Internationale Anmeldenummer: PCT/EP2024/072330
(87) Internationale Veröffentlichungsnummer: WO 2025/045539

(56) Entgegenhaltungen:
- EP-A1- 3 015 266
- WO-A1-2011/145028
- WO-A1-2020/200703

## Beschreibung

Die Erfindung betrifft eine Bogenbearbeitungsmaschine mit Kühlwalze und Inspektionseinrichtung sowie eine Bogendruckmaschine mit Simultan-Doppeldruckeinheit, Aushärtevorrichtung und Kühleinrichtung.

Durch die EP 1 142 712 A1 ist eine Vorrichtung zur Trocknung und Inspektion von Bogen in einer Wertpapierdruckmaschine bekannt.

Durch die EP 3 530 460 A1 ist eine Druckmaschine bekannt, die ein Aushärtekammer aufweist, die teilweise durch einen Kühlzylinder und teilweise durch als LED-Lampen ausgebildete UV-Lampen begrenzt wird.

Durch die WO 2004/039589 A1 ist ein Rotationskörper einer Druckmaschine bekannt, der ein zur Durchleitung von Temperierungsmittel ausgebildetes Leitungssystem aufweist.

Durch die DE 477 308 A ist eine Ausführtrommel einer Tiefdruckmaschine bekannt, die Greifer und Hohlräume für Kühlwasser aufweist.

Durch die EP 0 557 245 A1 ist ein Zylinder für eine bahnförmiges Material verarbeitende Maschine bekannt, der Flüssigkeitsleitungen aufweist.

Durch die EP 3 130 468 A2 und die WO 2011/145028 A1 ist jeweils eine Bogenbearbeitungsmaschine bekannt, die eine Auftragvorrichtung mit einer Auftragstelle aufweist, wobei entlang eines für Bogen vorgesehenen Transportwegs nach der Auftragstelle zunächst zumindest ein Inspektionstransportkörper mit jeweils darauf ausgerichteter Inspektionseinrichtung und danach ein Kühlzylinder angeordnet ist.

Durch die DE 10 2018 212 429 B4 ist eine Bogenbearbeitungsmaschine bekannt, die eine Auftragvorrichtung mit einer Auftragstelle aufweist, wobei entlang eines für Bogen vorgesehenen Transportwegs nach der Auftragstelle einen Kühlzylinder aufweist, auf den eine Inspektionseinrichtung ausgerichtet angeordnet sein kann.

Durch die DE 10 2005 062 203 A1 ist eine Bogendruckmaschine bekannt, die einen Zylinder aufweist, der Kühlelemente zum zeitweisen Halten von Bogen mittels einer Schicht von gefrorenem Adhäsionsmittel aufweist. Dadurch sollen die Bogen beispielsweise für eine Inspektion sicher auf diesem Zylinder gehalten werden.

Durch die DE 10 2019 108 765 A1 und die WO 2020/200703 A1 ist jeweils eine Siebdruckmaschine bekannt, mittels der Bogen einseitig bedruckbar sind und die entlang eines Transportwegs für Bogen nach einer Auftrageinrichtung eine Aushärteeinrichtung mit als UV-LED ausgebildeten Strahlungsquellen und danach einen Kühlzylinder aufweist.

Durch die DE 10 2013 213 998 A1 ist eine Rollendruckmaschine mit Tintenstrahldruckvorrichtungen bekannt, die Infrarotstrahlungstrockner und Kühlwalzen aufweist.

Durch die DE 10 2013 200 113 A1 ist eine Rollen-Druckmaschine bekannt, die eine Trocknungseinrichtung aufweist und deren Bahntransportweg so veränderbar ist, dass wahlweise eine erste oder eine zweite Seite einer Bahn bedruckt und getrocknet werden kann.

Durch die DE 10 2018 127 936 A1 ist eine Siebdruckmaschine bekannt die Bogen einseitig bedruckt und die eine Aushärteeinrichtung mit als UV-LED ausgebildeten Strahlungsquellen und einen Kühlzylinder aufweist.

Durch die EP 3 015 266 A1 ist eine Bogenbearbeitungsmaschine mit Auftrageinrichtung und einer magnetischen Ausrichteinrichtung bekannt, wobei eine Kamera angeordnet ist, um einen Transport von Bogen im Bereich der Ausrichteinrichtung zu beobachten.

Der Erfindung liegt die Aufgabe zugrunde, eine Bogenbearbeitungsmaschine mit Kühlwalze und Inspektionseinrichtung sowie eine Bogendruckmaschine mit Simultan-Doppeldruckeinheit und Aushärtevorrichtung zu schaffen.

Die Aufgabe wird erfindungsgemäß durch die Merkmale des Anspruches 1 und die Merkmale des Anspruches 10 gelöst.

Einer Bogenbearbeitungsmaschine ist ein für einen Transport von Bogen vorgesehener Transportweg zugeordnet. Die Bogenbearbeitungsmaschine weist zumindest eine Auftrageinrichtung mit zumindest einer entlang des für den Transport von Bogen vorgesehenen Transportwegs angeordneten Auftragstelle zum Auftragen von Material auf Bogen auf. Die Bogenbearbeitungsmaschine ist bevorzugt als Bogendruckmaschine ausgebildet. Bevorzugt ist entlang des für den Transport von Bogen vorgesehenen Transportwegs nach der zumindest einen Auftragstelle eine Aushärtevorrichtung angeordnet, die weiter bevorzugt zumindest eine UV-Strahlungsquelle aufweist, die weiter bevorzugt als LED-UV-Strahlungsquelle ausgebildet ist. Bevorzugt ist der Aushärtevorrichtung zumindest eine Kühleinrichtung zugeordnet, die zumindest ein Kühlelement aufweist, das weiter bevorzugt ein Leitungssystem aufweist, das zum Transport von Kühlflüssigkeit von dieser durchströmbar ist. Bevorzugt ist das zumindest eine Kühlelement als rotierbarer Kühlzylinder ausgebildet. Bevorzugt ist entlang des für den Transport von Bogen vorgesehenen Transportwegs nach der zumindest einen Auftragstelle die zumindest eine Kühleinrichtung angeordnet, die das zumindest eine Kühlelement aufweist, das weiter bevorzugt als Kühlzylinder ausgebildet ist. Die Anordnung einer Kühleinrichtung sorgt für eine schnelle Abkühlung des Substrats nach der Aushärtung. Dadurch wird das Substrat geschont und kann schneller inspiziert und/oder weiterverarbeitet werden. Beispielsweise wird eine Verformung des Substrats während des Aushärtens verringert oder vermieden.

Bevorzugt ist zumindest ein Aushärteabschnitt des für den Transport von Bogen vorgesehenen Transportwegs durch zumindest einen Einwirkbereich der Aushärteeinrichtung festgelegt. Bevorzugt ist ein Kühlabschnitt des für den Transport von Bogen vorgesehenen Transportwegs durch zumindest einen Einwirkbereich des zumindest einen Kühlelements festgelegt. Bevorzugt ist jeglicher Kühlabschnitt nach jeglichem Aushärteabschnitt angeordnet. Durch die räumliche Trennung von Aushärteabschnitt und Kühlabschnitt kann eine erste Phase der Abkühlung passiv stattfinden, also insbesondere durch Abgabe von Wärme an Umgebungsluft. In dieser ersten Phase ist der Temperaturunterschied zwischen Substrat und Umgebung am größten, so dass eine passive Abkühlung am effektivsten ist. Nach der ersten Phase der Abkühlung kann dann die Abkühlung durch das zumindest eine Kühlelement besonders effizient eingesetzt werden. Zudem wird vermieden, dass das zumindest eine Kühlelement mit noch nicht ausgehärtetem aufgetragenem Material in Berührung kommt. Dadurch werden Verschmutzungen des zumindest einen Kühlelements vermieden.

Bevorzugt weist der Kühlzylinder zumindest ein Greifersystem zum Greifen von Bogen auf. Dadurch ist ein besonders sicherer Transport von bogenförmigem Substrat ermöglicht.

Bevorzugt weist die zumindest eine Auftrageinrichtung zumindest einen insbesondere zum Tragen zumindest einer Druckform ausgebildeten Formzylinder auf und entspricht ein wirksamer Umfang des zumindest einen Kühlzylinders einem ganzzahligen Vielfachen eines wirksamen Umfangs dieses zumindest einen Formzylinders. Durch den zumindest doppelt großen Umfang wird eine besonders große Strecke des für den Transport von Bogen vorgesehenen Transportwegs durch den Kühlzylinder festgelegt und damit dessen Einwirkbereich vergrößert. Dies sorgt für eine besonders effektive Kühlung und ermöglicht eine große Transportgeschwindigkeit und damit eine hohe Druckgeschwindigkeit.

Bevorzugt ist entlang des für den Transport von Bogen vorgesehenen Transportwegs nach der zumindest einen Auftragstelle und vor dem zumindest einen Kühlzylinder eine Aushärtevorrichtung angeordnet. Bevorzugt weist die Aushärtevorrichtung zumindest eine UV-Strahlungsquelle und/oder zumindest eine LED-UV-Strahlungsquelle auf. Solche Aushärteeinrichtungen sind energiesparend einsetzbar.

Bevorzugt weist die Aushärtevorrichtung zumindest eine erste Aushärteeinrichtung auf, die eine Vielzahl von LED-UV-Strahlungsquellen aufweist, die auf eine Querrichtung bezogen an unterschiedlichen Stellen auf den für den Transport von Substrat vorgesehenen Transportweg ausgerichtet angeordnet sind. Bevorzugt weist die Aushärtevorrichtung zumindest eine erste Aushärteeinrichtung auf und sind in einer Transportrichtung und/oder entlang des für den Transport von Bogen vorgesehenen Transportwegs mehrere LED-UV-Strahlungsquellen der zumindest einen ersten Aushärteeinrichtung nacheinander angeordnet. Dies ermöglicht einen auf den jeweiligen Druckauftrag angepassten und dadurch energiesparenden und materialschonenden Betrieb.

Bevorzugt weist die Aushärtevorrichtung zumindest eine zweite Aushärteeinrichtung auf und verläuft der für den Transport von Bogen vorgesehene Transportweg zwischen der ersten Aushärteeinrichtung und der zweiten Aushärteeinrichtung hindurch. Dadurch kann insbesondere bei einem beidseitigen Bedruck optimiert ausgehärtet werden.

Bevorzugt weist die Bogenbearbeitungsmaschine ein Aushärte- und Inspektionsmodul auf, wobei weiter bevorzugt das Aushärte- und Inspektionsmodul die Aushärtevorrichtung und das zumindest eine als Kühlzylinder ausgebildete Kühlelement und die zumindest eine Inspektionsvorrichtung aufweist und/oder das Aushärte- und Inspektionsmodul ein eigenes Maschinengestell aufweist. Dies ermöglicht insbesondere eine einfache Nachrüstung bestehender Anlagen. Zudem ist bei entsprechender Ausgestaltung eine besonders gute Zugänglichkeit der einzelnen Komponenten gewährleistet.

Bevorzugt weist die Bogenbearbeitungsmaschine zumindest eine Inspektionsvorrichtung auf, die auf einen Bereich des für den Transport von Bogen vorgesehenen Transportwegs ausgerichtet angeordnet ist, der nach dem zumindest einen Kühlelement angeordnet ist. Bevorzugt ist entlang des für den Transport von Bogen vorgesehenen Transportwegs nach dem zumindest einen Kühlelement zumindest ein erster weiter bevorzugt als Inspektionstransportzylinder ausgebildeter Inspektionstransportkörper angeordnet, auf den zumindest eine Sensoreinrichtung einer ersten Inspektionseinrichtung ausgerichtet angeordnet ist. Durch ein Kühlen des Substrats vor dessen Inspektion ist sichergestellt, dass das Druckprodukt in einem Zustand inspiziert wird, der dem gewünschten Endzustand am nächsten kommt und somit ungewollte temperaturbedingte Unsicherheiten der Inspektion vermieden werden. Beispielsweise findet keine negative Beeinflussung des Spektrums der von dem Substrat ausgehenden Strahlung durch Überlagerung mit entsprechender Wärmestrahlung statt. Dies ist insbesondere bei Inspektion im Infrarotbereich vorteilhaft. Insbesondere wenn zunächst eine Aushärtung und Kühlung und danach eine Inspektion stattfindet, wird neben den Vorteilen hinsichtlich der Inspektion auch sichergestellt, dass die Inspektionstransportkörper nicht durch aufgetragenes Material wie Druckfarbe oder Lack verschmutzt werden. Somit kann die Druckqualität erhöht werden, weil eine ungewollte Rückübertragung vermieden wird. Zudem wird vermieden, dass die Bearbeitungsmaschine ungewollt oft für Reinigungs- und/oder Wartungsarbeiten stillgelegt werden muss.

Bevorzugt weist die zumindest eine Inspektionsvorrichtung eine erste Inspektionseinrichtung insbesondere zur Inspektion einer ersten Seite von Bogen und weiter bevorzugt eine insbesondere zusätzliche zweite Inspektionseinrichtung insbesondere zur Inspektion einer zweiten Seite von Bogen auf. Bevorzugt verläuft der für den Transport von Bogen vorgesehene Transportweg zwischen der ersten Inspektionseinrichtung und der zweiten Inspektionseinrichtung hindurch. Bevorzugt ist der zweiten Inspektionseinrichtung ein insbesondere als zweiter Inspektionstransportzylinder ausgebildeter zweiter Inspektionstransportkörper zugeordnet, auf den zumindest eine Sensoreinrichtung der zweiten Inspektionseinrichtung ausgerichtet angeordnet ist. Dies ermöglicht eine einfache Inspektion beider Seiten eines Substrats.

Die erste Inspektionseinrichtung weist bevorzugt zumindest eine Sensoreinrichtung zur Erfassung von elektromagnetischer Strahlung im sichtbaren Bereich des Spektrums auf. Die erste Inspektionseinrichtung weist bevorzugt zumindest eine Sensoreinrichtung zur Erfassung von elektromagnetischer Strahlung in einem ersten Abschnitt des Infrarotbereichs des Spektrums auf. Damit lassen sich beispielsweise Sicherheitsmerkmale von Wertpapieren auf ihre korrekte Herstellung inspizieren.

Bevorzugt weist der erste Inspektionstransportkörper oder Inspektionstransportzylinder zumindest ein Greifersystem zum Greifen von Bogen auf und/oder ist der erste Inspektionstransportkörper oder Inspektionstransportzylinder als Saugtransportzylinder ausgebildet. Jede dieser Einrichtungen erhöht eine Präzision der Lage und des Transports von insbesondere bogenförmigem Substrat auf dem entsprechenden Inspektionstransportkörper oder Inspektionstransportzylinder.

Bevorzugt weist die Bogenbearbeitungsmaschine ein insbesondere als erstes Kettenfördersystem oder bevorzugt Kettengreifersystem ausgebildetes vorgeordnetes Bogentransportmittel auf, das weiter bevorzugt zumindest eine hintere Kettenumlenkwelle aufweist und dass eine insbesondere erste Übergabestelle zur Übergabe von Bogen von dem vorgeordneten Bogentransportmittel an das bevorzugt als Kühlzylinder ausgebildete Kühlelement festgelegt ist, insbesondere im Bereich der hinteren Kettenumlenkwelle des ersten Kettenfördersystems. Dann kann beispielsweise der Aushärteabschnitt im Bereich des Kettenfördersystems angeordnet sind, in dem ein nahezu kontaktloser Transport und damit eine verbesserte passive Kühlung ohne Aufheizung von Bauteilen ermöglicht wird. Dementsprechend heizt sich beispielsweise kein Transportzylinder übermäßig auf und/oder muss beispielsweise kein Transportzylinder übermäßig gekühlt werden.

Bevorzugt weist die Bogenbearbeitungsmaschine eine insbesondere zweite Übergabestelle zur Übergabe von Bogen von dem bevorzugt als Kühlzylinder ausgebildeten Kühlelement an den ersten Inspektionstransportkörper oder Inspektionstransportzylinder auf. Durch die Anordnung dieser Bauelemente entlang des Transportwegs direkt nacheinander können Bauraum und/oder Übergabestellen eingespart werden.

Die Bogenbearbeitungsmaschine ist bevorzugt als Wertpapier-Bogendruckmaschine ausgebildet. Die Bogenbearbeitungsmaschine weist bevorzugt eine Mehrfachstapelauslage auf. Die Bogenbearbeitungsmaschine weist bevorzugt zumindest eine Simultandruckeinheit und/oder zumindest eine Simultan-Doppeldruckeinheit auf. Diese stellt dann beispielsweise die zumindest eine Auftrageinrichtung dar. Mittels einer Simultandruckeinheit lassen sich Drucke mit besonders hoher Passerqualität realisieren. Mit einer Simultan-Doppeldruckeinheit lassen sich zudem Drucke mit besonders hoher Registerqualität realisieren. Durch schonende Materialbehandlung und entsprechende Inspektion, insbesondere im getrockneten und bereits abgekühlten Zustand, kann zudem eine insgesamt besonders hohe Produktqualität erreicht werden.

Der Kühlzylinder weist bevorzugt zumindest einen Zylinderballen und zwei an dessen Enden angeordnete Zylinderzapfen auf, wobei dem Zylinderballen eine Zylinderachse zugeordnet ist. Der Kühlzylinder weist bevorzugt ein zur Durchleitung von Temperierungsmittel ausgebildetes Leitungssystem auf. Bevorzugt weist der Zylinderballen zumindest einen Grundkörper aufweist, der weiter bevorzugt zu zumindest 50 % aus Aluminium besteht. Dies ermöglicht eine besonders hohe Wärmeleitfähigkeit und zugleich ein geringes Trägheitsmoment und damit hohe mögliche Beschleunigungen. Eine Außenfläche des Zylinderballens weist bevorzugt zumindest einen Transportbereich auf, der als Auflagefläche für bogenförmiges Substrat ausgebildet ist, wobei die Außenfläche des Zylinderballens bevorzugt zumindest einen Zylinderkanal aufweist, in dem zumindest ein ein Greifersystem aufweisendes Haltemittel zum Halten von bogenförmigem Substrat angeordnet ist. Bevorzugt weist der Grundkörper eine Mehrzahl von als Bohrungen ausgeführten Strömungsleitungen auf, die sich parallel zu der Zylinderachse erstrecken und die als Bestandteile des Leitungssystems ausgebildet sind. Dies erlaubt einen besonders einfachen Aufbau des Kühlzylinders. Bevorzugt weist der Grundkörper an seiner Außenfläche eine durch Eloxieren erzeugte Schicht auf.

Der Grundkörper ist bevorzugt als im Wesentlichen rohrförmiger Grundkörper ausgebildet. Auch dies kommt einem einfachen Aufbau zugute. Bevorzugt weist der Grundkörper einen inneren Hohlraum auf, der sich parallel zu der Zylinderachse über den gesamten Grundkörper erstreckt und dessen orthogonal zu der Zylinderachse orientierte Abmessung zumindest 50 % eines maximalen Außendurchmessers des Grundkörpers beträgt. Dies erlaubt einen leichten und dennoch stabilen Aufbau. Bevorzugt erstrecken sich die als Bohrungen ausgeführten Strömungsleitungen parallel zu der Zylinderachse über den gesamten Grundkörper. Bevorzugt weist der Zylinderballen zumindest zwei Endstücke auf, die jeweils Leitungsabschnitte enthalten und mit den Strömungsleitungen des Grundkörpers strömungstechnisch verbunden sind.

Bevorzugt weist der Kühlzylinder zur Steuerung des Greifersystems des zumindest einen Haltemittels zumindest ein zum Zusammenwirken mit einer Kurvenscheibe ausgebildetes Abtastmittel auf.

Die Bogenbearbeitungsmaschine weist bevorzugt zusätzlich zu dem Kühlzylinder zumindest einen Antriebsmotor auf, wobei weiter bevorzugt der Kühlzylinder an einem Zylinderzapfen ein Zahnrad aufweist und der zumindest eine Antriebsmotor in Drehmoment übertragender oder zu übertragen fähiger Weise mit dem zumindest einen Zahnrad verbunden ist.

Ausführungsbeispiele der Erfindung sind in den Zeichnungen dargestellt und werden im Folgenden näher beschrieben.

Es zeigen:
- Fig. 1a: eine schematische Darstellung eines eine Substratzufuhreinrichtung und eine Druckeinheit umfassenden Teils einer beispielhaften, als Druckmaschine ausgebildeten Bogenbearbeitungsmaschine;
- Fig. 1b: eine schematische Darstellung eines eine Aushärtevorrichtung, eine Inspektionsvorrichtung und eine Substratabgabeeinrichtung umfassenden Teils der Bogenbearbeitungsmaschine gemäß Fig. 1a;

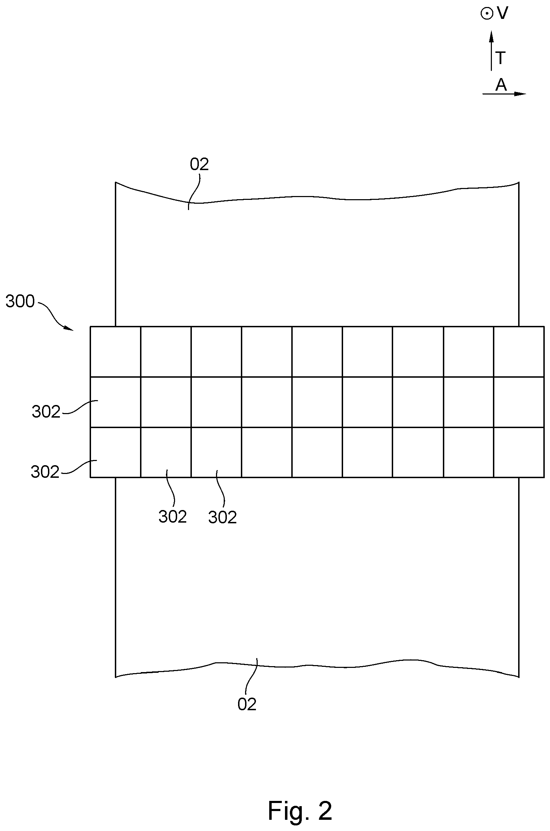

- Fig. 2: eine schematische Darstellung einer Aushärtevorrichtung mit mehreren Strahlungsquellen;

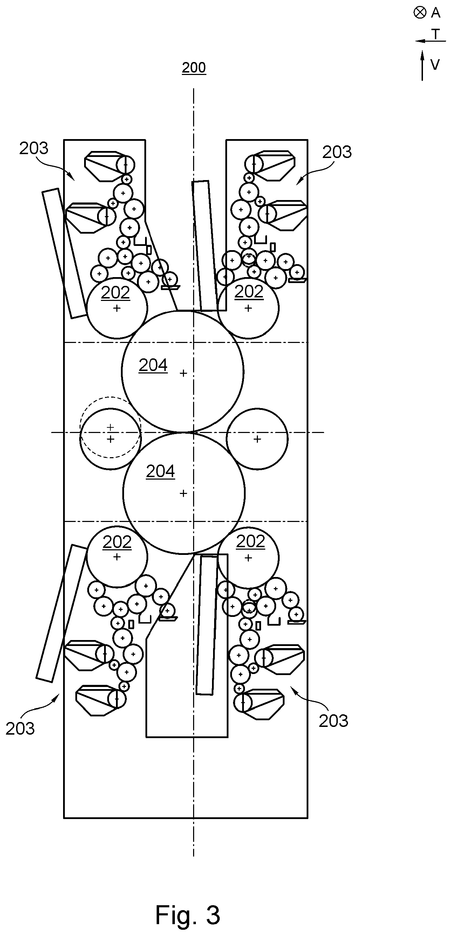

- Fig. 3: eine schematische Darstellung einer alternativen Ausführungsform einer Simultandruckeinheit mit zwei Sammelzylindern, die jeweils mit zwei Formzylindern zusammenwirken;

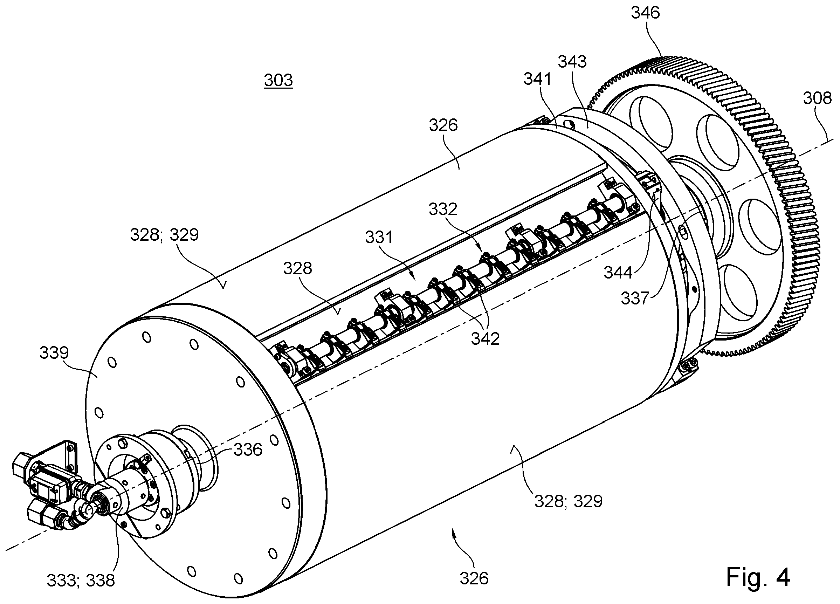

- Fig. 4: eine schematische Darstellung eines Kühlzylinders mit Drehdurchführung und Zahnrad in einer Schrägansicht;

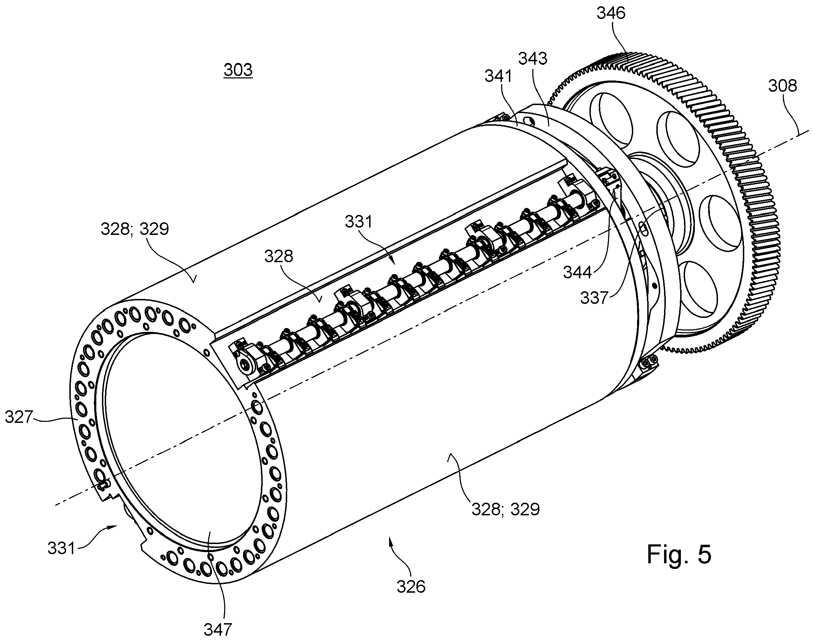

- Fig. 5: eine schematische Darstellung gemäß Fig. 4, wobei ein Innenbereich des Kühlzylinders sichtbar gemacht wurde;

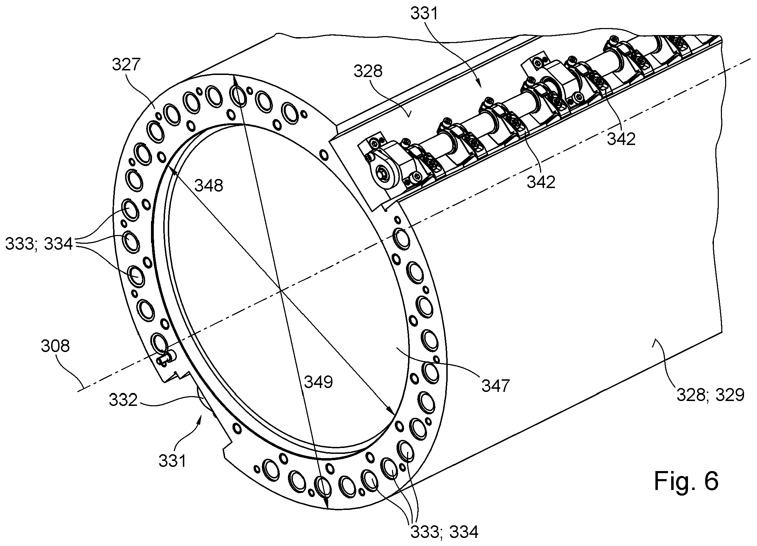

- Fig. 6: eine schematische vergrößerte Darstellung eines Teils der Darstellung gemäß Fig. 5;

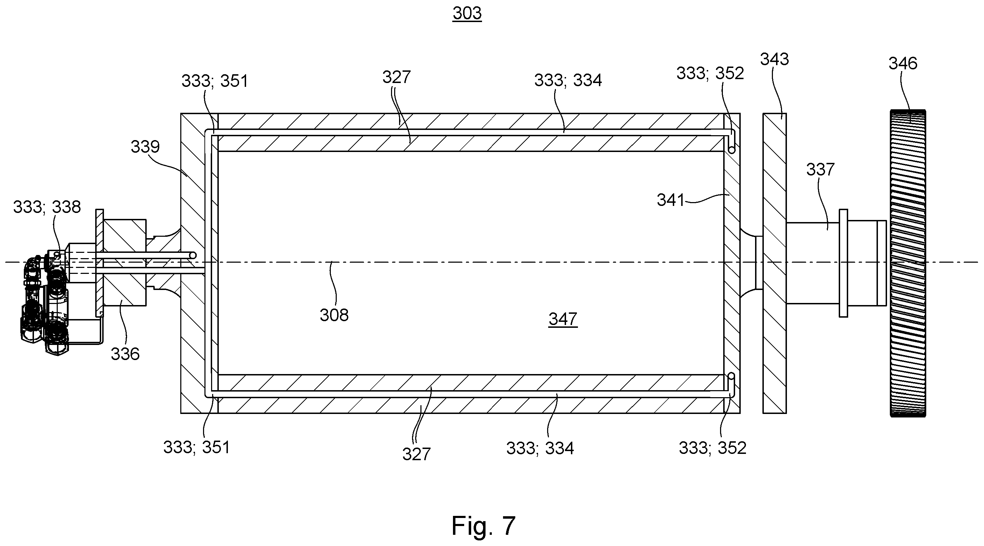

- Fig. 7: eine schematische Darstellung, teil als Schnitt, teils als Ansicht, eines Kühlzylinders gemäß Fig. 4;

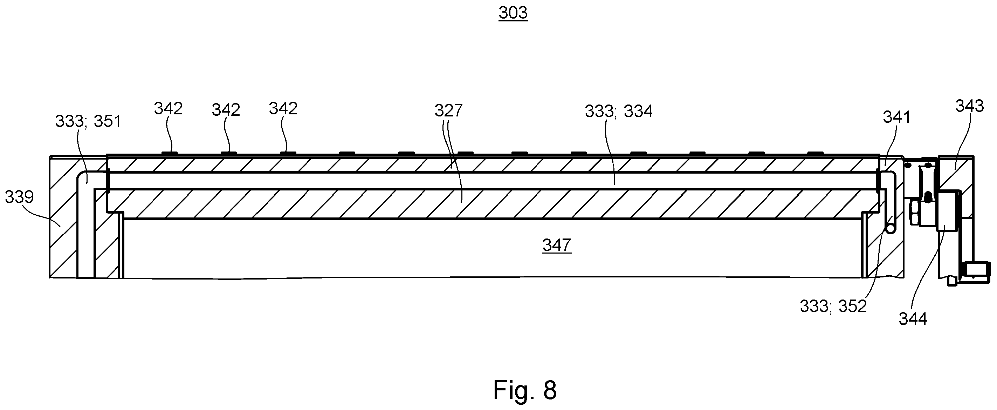

- Fig. 8: eine schematische Darstellung eines Bereichs des Kühlzylinders und einer Kurvenscheibe.

Eine Substratbearbeitungsmaschine 01 ist bevorzugt als Bogenbearbeitungsmaschine 01 ausgebildet. Eine Bogenbearbeitungsmaschine 01 ist beispielsweise als Bogendruckmaschine 01 ausgebildet, insbesondere als Bogen-Rotationsdruckmaschine 01. Bevorzugt ist die Bogenbearbeitungsmaschine 01 als Wertpapier-Bogenbearbeitungsmaschine 01 ausgebildet, insbesondere als Wertpapier-Bogendruckmaschine 01. Im Folgenden wird eine beispielhafte Bogenbearbeitungsmaschine 01 beschrieben.

Die Bogenbearbeitungsmaschine 01 weist beispielsweise eine Substratzufuhreinrichtung 100 auf. Die Bogenbearbeitungsmaschine 01 weist beispielsweise zumindest eine Bearbeitungseinrichtung 200 oder Bogenbearbeitungseinrichtung 200 auf, die beispielsweise als Auftrageinrichtung 200 ausgebildet ist. Die Bogenbearbeitungsmaschine 01 weist beispielsweise zumindest eine Aushärtevorrichtung 300 auf. Die Bogenbearbeitungsmaschine 01 weist beispielsweise zumindest eine Kühleinrichtung 301 auf. Beispielsweise weist die Bogenbearbeitungsmaschine 01 zumindest eine Inspektionsvorrichtung 400 auf. Die Bogenbearbeitungsmaschine 01 weist beispielsweise zumindest eine Substratabgabeeinrichtung 500 auf. Der Bogenbearbeitungsmaschine 01 ist bevorzugt ein für einen Transport von Bogen 02 vorgesehener Transportweg zugeordnet.

Die Bogenbearbeitungsmaschine 01 weist bevorzugt die zumindest eine insbesondere als Bogenanleger 100 ausgebildete Substratzufuhreinrichtung 100 bzw. Bedruckstoffzufuhreinrichtung 100 oder Bogenzufuhreinrichtung 100 auf, insbesondere zusätzlich zu der zumindest einen Bogenbearbeitungseinrichtung 200 und/oder entlang eines für einen Transport von Substrat 02, insbesondere Bogen 02 vorgesehenen Transportwegs vor dem zumindest einen und weiter bevorzugt vor jeder Bogenbearbeitungseinrichtung 200. Die zumindest eine Substratzufuhreinrichtung 100 weist beispielsweise eine beispielsweise als Bändertisch ausgebildeten Förderstrecke auf. Beispielsweise ist zumindest eine bevorzugt als Stapelplatte ausgebildete Aufnahmeeinrichtung angeordnet. Auf dieser können dann als Bogenstapel ausgebildete Bedruckstoffgebinde zur Vereinzelung angeordnet werden. Die Aufnahmeeinrichtung ist bevorzugt mit zumindest einem Transportmittel verbunden, welches sicherstellt, dass der jeweils oberste Bogen des Bogenstapels in einer definierten Position angeordnet ist, auch wenn der Bogenstapel abgearbeitet wird. Die Substratzufuhreinrichtung 100 umfasst vorzugsweise Bogenvereinzelungsorgane und Bogentransportorgane. Die Bogenvereinzelungsorgane sind beispielsweise als Trennsauger ausgebildet. Die Bogentransportorgane sind beispielsweise als Transportsauger ausgebildet. Bevorzugt ist zumindest ein Vorderanschlag angeordnet. Beispielsweise verfügt die Substratzufuhreinrichtung 100 über zumindest eine Nonstop-Einrichtung für eine unterbrechungsfreie Versorgung mit Bogen 02 auch bei Anordnung eines nachfolgenden Stapels. Der dem Bogenstapel nachgeordnete Bändertisch ist beispielsweise als Saugbändertisch ausgebildet. Beispielsweise ist zumindest eine als Bogenanlage bezeichnete Anlageeinrichtung angeordnet, die vorzugsweise einen Anlegetisch aufweist und zumindest einen bewegbaren Vorderanschlag aufweist.

Eine Querrichtung A ist bevorzugt eine horizontale Richtung A, die orthogonal zu einer Transportrichtung T orientiert ist. Die Transportrichtung T ist insbesondere im Fall eines gekrümmten Transportwegs bevorzugt jeweils diejenige Richtung T, die tangential zu einem einem jeweiligen Referenzpunkt nächsten Teilstück und/oder Punkt des vorgesehenen Transportwegs verläuft und für den Transport des Substrats 02 und/oder Bogens 02 an diesem Teilstück und/oder Punkt vorgesehen ist. Dieser jeweilige Referenzpunkt liegt bevorzugt an dem Punkt und/oder an dem Bauteil, das zu der Transportrichtung T in Bezug gesetzt wird. Die Transportrichtung T erstreckt sich demnach bevorzugt jeweils längs des für Substrat 02 und/oder Bogen 02 vorgesehenen Transportwegs.

Die Bearbeitungsmaschine 01 weist bevorzugt zumindest eine Bearbeitungseinrichtung 200 für eine Bearbeitung von Substrat 02 auf. Das Substrat 02 ist bevorzugt als bogenförmiges Substrat 02 ausgebildet. Die zumindest eine Bearbeitungseinrichtung 200 weist zumindest eine Bearbeitungsstelle 201 auf. Die zumindest eine Bearbeitungseinrichtung 200 ist beispielsweise als Auftrageinrichtung 200 ausgebildet und weist bevorzugt zumindest eine als Auftragstelle 201 zum Auftragen von Material auf insbesondere bogenförmiges Substrat 02 ausgebildete Bearbeitungsstelle 201 auf. Bevorzugt weist die Bogenbearbeitungsmaschine 01 zumindest eine Auftrageinrichtung 200 mit zumindest einer entlang des für den Transport von Bogen 02 vorgesehenen Transportwegs angeordneten Auftragstelle 201 zum Auftragen von Material auf Bogen 02 auf. Bevorzugt ist die zumindest eine Bearbeitungseinrichtung 200 als Druckeinheit 200 ausgebildet und weist zumindest eine als Druckstelle 201 ausgebildete Bearbeitungsstelle 201 auf. Die Auftrageinrichtung 200 ist beispielsweise als formgebundene Auftrageinrichtung 200 ausgebildet und/oder weist zumindest einen Formzylinder 202 auf, der beispielsweise als Plattenzylinder 202 ausgebildet ist. Alternativ oder zusätzlich ist die Auftrageinrichtung 200 beispielsweise als Non Impact Auftrageinrichtung 200 ausgebildet und/oder weist zumindest einen ansteuerbaren Druckkopf auf. Die zumindest eine Druckeinheit 200 weist bevorzugt zumindest ein Druckwerk 203 und/oder zumindest einen Formzylinder 202 auf. Jedes solche Druckwerk 203 weist beispielsweise ein ihm zugeordnetes Farbwerk und/oder ein ihm zugeordnetes Feuchtwerk auf.

Im Folgenden wird als Auftrageinrichtung 200 beispielhaft eine Druckeinheit 200 beschrieben, die zumindest einen Formzylinder 202 und zumindest ein Druckwerk 203 aufweist. Der zumindest eine Formzylinder 202 ist bevorzugt als zumindest ein Plattenzylinder 202 ausgebildet. Bevorzugt ist die Druckeinheit 200 als Mehrfarbendruckeinheit 200 ausgebildet. Vorzugsweise sind in der zumindest einen Druckeinheit 200 mehrere Druckwerke 203 und entsprechend mehrere Farbwerke vorgesehen, um in einer selben Produktion verschiedene Druckfarben auf dasselbe Substrat 02 zu drucken, beispielsweise entsprechend der Anzahl dieser Farbwerke. In einer Ausführungsform sind in derselben Druckeinheit 200 Druckwerke 203 angeordnet, die bevorzugt nach unterschiedlichen Druckprinzipien arbeiten. Beispielsweise ist zumindest ein Druckwerk 203 als ein Flachdruckwerk 203, beispielsweise ein Offsetdruckwerk 203 ausgebildet und/oder ist zumindest ein anderes Druckwerk 203 als ein Hochdruckwerk 203, insbesondere ein indirektes Hochdruckwerk 203 ausgebildet. Es kann ein wasserloses Offsetdruckverfahren eingesetzt werden. Alternativ oder zusätzlich kann ein so genanntes Nassoffsetdruckverfahren eingesetzt werden, für das das Druckwerk dann zumindest ein Feuchtwerk aufweist. Diese unterschiedlichen Druckwerke 203 bedrucken dann beispielsweise in einer selben Produktion einen selben Bedruckstoff 02, weiter bevorzugt mittels zumindest eines Übertragungszylinders 204 und noch weiter bevorzugt mittels zumindest eines gemeinsamen Übertragungszylinders 204, der auch als Sammelzylinder 204 bezeichnet wird. In einer Ausführungsform ist bevorzugt zumindest ein Druckwerk 203 als zumindest ein Stahlstichdruckwerk 203 ausgebildet. Ein Beispiel für einen indirekten Hochdruck ist ein Lettersetdruck.

Beispielsweise ist die zumindest eine Druckeinheit 200 als Simultandruckeinheit 200 ausgebildet. Eine Simultandruckeinheit 200 weist einen Sammelzylinder 204 auf, der mit mehreren Formzylindern 202 bevorzugt direkt zusammenwirkend angeordnet ist. Die Farben der mehreren Formzylinder 204 werden auf dem Sammelzylinder 204 gesammelt und dann gemeinsam in einer Druckstelle auf ein entsprechendes Substrat 02 übertragen. Eine Simultandruckeinheit 200 arbeitet daher nach einem indirekten Druckverfahren, beispielsweise einem indirekten Flachdruckverfahren oder Offsetdruckverfahren und/oder nach einem indirekten Hochdruckverfahren, insbesondere einem Lettersetdruckverfahren. Bevorzugt ist die Simultandruckeinheit 200 als Simultan-Doppeldruckeinheit 200 ausgebildet. Bei einer solchen bilden zwei Sammelzylinder 204 gemeinsam eine Druckstelle 201, in der Substrat 02 gleichzeitig beidseitig mehrfarbig bedruckt wird. Die beiden Sammelzylinder 202 wirken jeweils mit mehreren Formzylindern 204 insbesondere direkt zusammen, beispielsweise jeweils mit genau zwei Formzylindern 204 oder jeweils mit genau vier Formzylindern 204.

Bevorzugt weist die zumindest eine Druckeinheit 200 zumindest einen bevorzugt als Gummituchzylinder 204 ausgebildeten Übertragungszylinder 204 auf, durch dessen Kontaktbereich mit einem weiteren Zylinder 204, insbesondere einem weiteren beispielsweise als Gummituchzylinder 204 und/oder Sammelzylinder 204 ausgebildeten Übertragungszylinder 204 bevorzugt eine Druckstelle 201 festgelegt ist und der bevorzugt mit mehreren Formzylindern 202 in Kontakt steht. Bevorzugt weist die zumindest eine Druckeinheit 200 demnach zumindest ein Paar von bevorzugt als Gummituchzylindern 204 und/oder Sammelzylindern 204 ausgebildeten Übertragungszylindern 204 auf, durch dessen gemeinsamen Kontaktbereich eine Druckstelle 201 der Druckeinheit 200 festgelegt ist. Bevorzugt steht zumindest einer und weiter bevorzugt jeder der zumindest zwei Übertragungszylinder 204 mit zumindest einem Formzylinder 202 und weiter bevorzugt mit mehreren, beispielsweise genau zwei oder genau vier Formzylindern 202 in bevorzugt rollendem Kontakt.

Bevorzugt ist jedes mit einem Formzylinder 202 zusammenwirkende Farbwerk von diesem jeweiligen Formzylinder 202 weg bewegbar angeordnet. Dadurch ist der entsprechende Formzylinder 202 für Wartungsarbeiten und/oder für einen Druckplattenwechsel zugänglich. Weiter bevorzugt sind die Farbwerke aller mit einem gemeinsamen Übertragungszylinder 204 zusammenwirkender Formzylinder 202 gemeinsam von diesen Formzylinder 202 weg bewegbar angeordnet und dazu weiter bevorzugt in einem gemeinsamen Teilgestell gelagert.

In einem Druckbetrieb der Druckmaschine 01 wird zumindest ein von der Substratzufuhreinrichtung 100 abgegriffener Bogen 02, vorzugsweise eine Sequenz von mehreren Bogen 02, der Druckeinheit 200 zugeführt. Die Druckeinheit 200 arbeitet bevorzugt im Schön- und Widerdruck, wobei beide Seiten des Substrats 09 in der Druckstelle 201 gleichzeitig eingefärbt werden. Weiter bevorzugt werden in der Druckstelle 201 mehrfarbige Druckbilder in einem einzigen Druckschritt auf das Substrat 02 übertragen. Diese mehrfarbigen Druckbilder setzen sich bevorzugt aus einzelnen farbigen Teildruckbildern zusammen, die zuvor von mehreren Plattenzylindern 202 auf den entsprechenden Übertragungszylinder 204 übertragen und dort gesammelt wurden. Die zumindest eine Druckeinheit 200 besteht bevorzugt aus zwei im Wesentlichen gleich aufgebauten Hälften. Jede der Hälften weist einen bevorzugt als Gummituchzylinder 06 ausgebildeten Übertragungszylinder 204 auf. Die Formzylinder 202 und insbesondere darauf angeordnete Druckplatten werden bevorzugt durch je ein Farbwerk mit jeweils einer anderen Druckfarbe eingefärbt. Die Formzylinder 202 übertragen bevorzugt jeweils zumindest ein Druckbild auf den entsprechenden Übertragungszylinder 204, an den sie angestellt sind. Dadurch wird bevorzugt ein mehrfarbiges Druckbild auf jedem Übertragungszylinder 204 geschaffen, das weiter bevorzugt in einem einzigen Schritt auf das Substrat 02 übertragen wird.

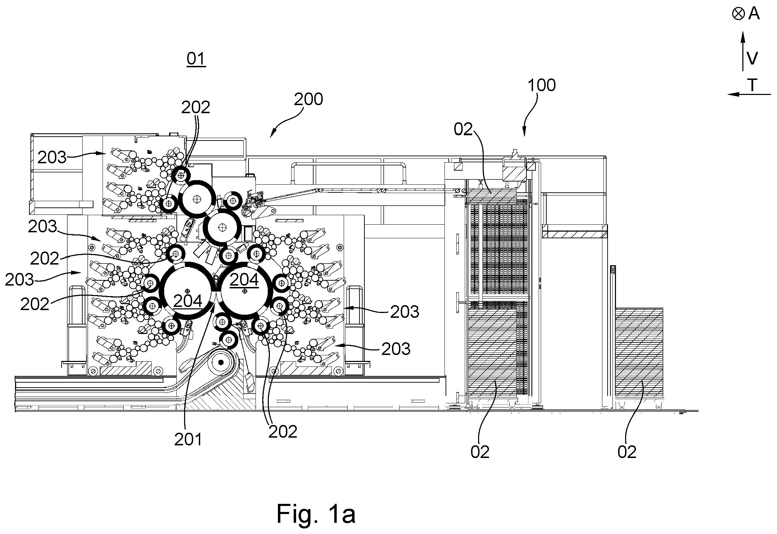

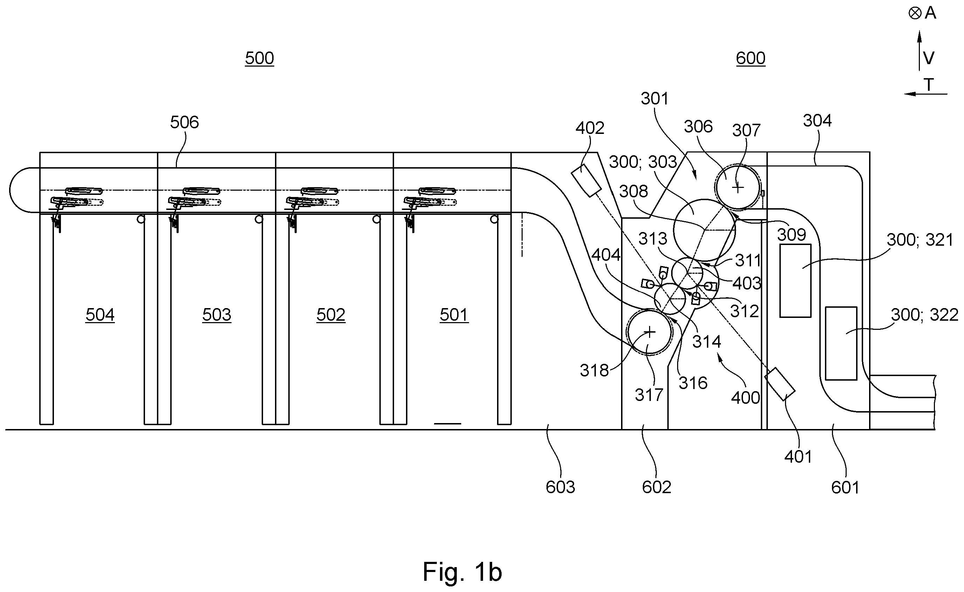

Die zumindest eine Druckeinheit 200 weist beispielsweise einen oder mehrere zusätzliche Sammelzylinder 204 auf, die ebenfalls mit jeweils mehreren Formzylindern 202 zusammenwirkend angeordnet sind. (Beispielhaft ist dies auch in Fig. 1 dargestellt.)

Alternativ oder zusätzlich weist die Bearbeitungsmaschine 01 nach anderen Verfahren arbeitende Auftrageinrichtungen 200 auf. Beispielsweise weist die Bearbeitungsmaschine 01 zumindest eine Siebdruckeinheit und/oder zumindest eine Flexo-Druckeinheit und/oder zumindest eine Hochdruckeinheit und/oder zumindest eine Nummier-Druckeinheit und/oder zumindest eine Tiefdruckeinheit auf.

Die Bearbeitungsmaschine 01 weist bevorzugt zumindest eine Aushärtevorrichtung 300 auf. Die zumindest eine Aushärtevorrichtung 300 ist bevorzugt entlang des für den Transport von Substrat 02, insbesondere Bogen 02 vorgesehenen Transportwegs nach der zumindest einen Auftrageinrichtung 200 bzw. nach der zumindest einen Auftragstelle 201, insbesondere Druckstelle 201 angeordnet. Beispielsweise ist die zumindest eine Aushärtevorrichtung 300 entlang des für den Transport von Substrat 02, insbesondere Bogen 02 vorgesehenen Transportwegs nach jeder Auftrageinrichtung 200 bzw. nach jeder Auftragstelle 201, insbesondere Druckstelle 201 angeordnet. Die zumindest eine Aushärteeinrichtung 300 weist bevorzugt zumindest eine erste Aushärteeinrichtung 321 auf, insbesondere zur Aushärtung von auf eine erste Seite von Bogen 02 aufgetragenes Material bzw. zur Trocknung der ersten Seite von Bogen 02. Weiter bevorzugt weist die zumindest eine Aushärtevorrichtung 300 auch eine zweite Aushärteeinrichtung 322 auf, insbesondere zur Aushärtung von auf eine zweite Seite von Bogen 02 aufgetragenes Material bzw. zur Trocknung der zweiten Seite von Bogen 01. Die zweite Seite ist dabei insbesondere die der ersten Seite gegenüberliegende Seite. Bevorzugt verläuft der für den Transport von Bogen 02 vorgesehene Transportweg zwischen der ersten Aushärteeinrichtung 321 und der zweiten Aushärteeinrichtung 322 hindurch.

Die Aushärtevorrichtung 300 weist bevorzugt zumindest eine UV-Strahlungsquelle 302 und/oder zumindest eine LED-UV-Strahlungsquelle 302 auf. Bevorzugt ist zumindest ein Aushärteabschnitt des für den Transport von Bogen 02 vorgesehenen Transportwegs durch zumindest einen Einwirkbereich der Aushärteeinrichtung 300 festgelegt. Dieser Aushärteabschnitt ist beispielsweise derjenige Abschnitt des für den Transport von Bogen 02 vorgesehenen Transportwegs, der sich mit einem Einwirkbereich der Aushärtevorrichtung 300 überschneidet, beispielsweise weil mittels der Aushärtevorrichtung 300 und insbesondere deren zumindest einer LED-UV-Strahlungsquelle 302 entsprechende elektromagnetische Strahlung auf diesen Aushärteabschnitt 300 gerichtet abgegeben wird.

Die zumindest eine Aushärtevorrichtung 300 und insbesondere die zumindest eine erste Aushärteeinrichtung 321 und/oder die zumindest eine zweite Aushärteeinrichtung 322 weist zumindest eine Strahlungsquelle 302 für elektromagnetische Strahlung auf, beispielsweise Infrarotstrahlung und/oder UV-Strahlung. Die zumindest eine Aushärtevorrichtung 300 und insbesondere die zumindest eine erste Aushärteeinrichtung 321 und/oder die zumindest eine zweite Aushärteeinrichtung 322 weist bevorzugt zumindest eine Strahlungsquelle 302 für ultraviolette Strahlung auf, also für elektromagnetische Strahlung mit zumindest einem überwiegend im UV-Spektralbereich, beispielsweise zwischen 100 nm und 380 nm, liegenden Anteil an emittierter Strahlungsleistung. Diese zumindest eine Strahlungsquelle 302 für ultraviolette Strahlung wird auch als UV-Strahlungsquelle 302 bezeichnet. Durch diese zumindest eine Aushärtevorrichtung 300 ist das die zumindest eine Aushärtevorrichtung 300 auf seinem Transportweg passierende Substrat 02 zu dessen Trocknung bzw. zur Aushärtung des aufgetragenen Materials mit Strahlung im ultravioletten Bereich des elektromagnetischen Spektrums beaufschlagbar. Die zumindest eine UV-Strahlungsquelle 302 ist bevorzugt als LED-UV-Strahlungsquelle 302 ausgebildet. Eine LED-UV-Strahlungsquelle 302 ist eine Strahlungsquelle 302, die als LED (light emitting diode) ausgebildet ist und die zum Aussenden von ultravioletter Strahlung ausgebildet ist. Bevorzugt ist entlang des für den Transport von Bogen 02 vorgesehenen Transportwegs nach der zumindest einen Auftragstelle 201 eine Aushärtevorrichtung 300 insbesondere zum Aushärten des aufgetragenen Materials angeordnet, die zumindest eine LED-UV-Strahlungsquelle 302 aufweist.

Bevorzugt weist die zumindest eine Aushärtevorrichtung 300 und insbesondere die zumindest eine erste Aushärteeinrichtung 321 und/oder die zumindest eine zweite Aushärteeinrichtung 322 jeweils eine Vielzahl von UV-Strahlungsquellen 302, insbesondere LED-UV-Strahlungsquellen 302 auf, die auf die Querrichtung A bezogen an unterschiedlichen Stellen auf den für den Transport von Substrat 02 vorgesehenen Transportweg ausgerichtet angeordnet sind. Weiter bevorzugt weist die zumindest eine Aushärtevorrichtung 300 und insbesondere die zumindest eine erste Aushärteeinrichtung 321 und/oder die zumindest eine zweite Aushärteeinrichtung 322 jeweils zumindest fünf UV-Strahlungsquellen 302, insbesondere LED-UV-Strahlungsquellen 302 auf, die auf die Querrichtung A bezogen an unterschiedlichen Stellen auf den für den Transport von Substrat 02 vorgesehenen Transportweg ausgerichtet angeordnet sind, noch weiter bevorzugt zumindest zehn pro Meter, noch weiter bevorzugt zumindest zwanzig pro Meter und noch weiter bevorzugt zumindest fünfzig pro Meter und noch weiter bevorzugt zumindest einhundert pro Meter. Beispielsweise sind in Transportrichtung T und/oder entlang des für den Transport von Substrat 02 vorgesehenen Transportwegs mehrere LED-UV-Strahlungsquellen 302 der zumindest einen Aushärtevorrichtung 300 und insbesondere der zumindest einen ersten Aushärteeinrichtung 321 und/oder der zumindest einen zweiten Aushärteeinrichtung 322 nacheinander angeordnet, insbesondere jeweils zumindest zwei, bevorzugt jeweils zumindest fünf und weiter bevorzugt jeweils zumindest zehn. Beispielsweise sind die LED-UV-Strahlungsquellen 302 in Form einer Matrix aus mehreren Zeilen und mehreren Spalten angeordnet, die beispielsweise als LED-Array bezeichnet wird. Alternativ oder zusätzlich sind die können die LED-UV-Strahlungsquellen 302 zumindest teilweise in ihrer auf die Querrichtung A bezogenen Lage verlagerbar angeordnet, insbesondere zur Anpassung an eine auf die Querrichtung A bezogene Lage von auszuhärtendem Material auf dem Substrat 02.

Bevorzugt sind die LED-UV-Strahlungsquellen 302 der zumindest einen Aushärtevorrichtung 300 einzeln und/oder gruppenweise ansteuerbar, insbesondere in Teilgruppen, die kleiner sind als die Gesamtzahl der LED-UV-Strahlungsquellen 302 der zumindest einen Aushärtevorrichtung 300, weiter bevorzugt kleiner als die Hälfte der LED-UV-Strahlungsquellen 302 der zumindest einen Aushärtevorrichtung 300, noch weiter bevorzugt kleiner als ein Fünftel der LED-UV-Strahlungsquellen 302 der zumindest einen Aushärtevorrichtung 300 und noch weiter bevorzugt kleiner als ein Zehntel der LED-UV-Strahlungsquellen 302 der zumindest einen Aushärtevorrichtung 300.

Bevorzugt sind die LED-UV-Strahlungsquellen 302 der zumindest einen ersten Aushärteeinrichtung 321 einzeln und/oder gruppenweise ansteuerbar, insbesondere ein Teilgruppen, die kleiner sind als die Gesamtzahl der LED-UV-Strahlungsquellen 302 der zumindest einen ersten Aushärteeinrichtung 321, weiter bevorzugt kleiner als die Hälfte der LED-UV-Strahlungsquellen 302 der zumindest einen ersten Aushärteeinrichtung 321, noch weiter bevorzugt kleiner als ein Fünftel der LED-UV-Strahlungsquellen 302 der zumindest einen ersten Aushärteeinrichtung 321 und noch weiter bevorzugt kleiner als ein Zehntel der LED-UV-Strahlungsquellen 302 der zumindest einen ersten Aushärteeinrichtung 321. Bevorzugt sind die LED-UV-Strahlungsquellen 302 der zumindest einen zweiten Aushärteeinrichtung 322 einzeln und/oder gruppenweise ansteuerbar, insbesondere ein Teilgruppen, die kleiner sind als die Gesamtzahl der LED-UV-Strahlungsquellen 302 der zumindest einen zweiten Aushärteeinrichtung 322, weiter bevorzugt kleiner als die Hälfte der LED-UV-Strahlungsquellen 302 der zumindest einen zweiten Aushärteeinrichtung 322, noch weiter bevorzugt kleiner als ein Fünftel der LED-UV-Strahlungsquellen 302 der zumindest einen zweiten Aushärteeinrichtung 322 und noch weiter bevorzugt kleiner als ein Zehntel der LED-UV-Strahlungsquellen 302 der zumindest einen zweiten Aushärteeinrichtung 322.

Durch die gruppenweise Ansteuerung kann eine Anpassung der einer Aktivierung der jeweiligen LED-UV-Strahlungsquellen 302 an eine Verteilung und/oder Menge de auf das Substrat 02 aufgetragenen Materials erfolgen. Beispielsweise können die LED-UV-Strahlungsquellen 302 streifenweise aktiviert werden, wenn eine Aushärtung nicht über eine gesamte Breite hinweg notwendig ist. Beispielsweise können die LED-UV-Strahlungsquellen 302 getaktet betrieben werden, so dass Strahlung nur dann ausgesendet wird, wenn auszuhärtendes Material gerade unter der jeweiligen LED-UV-Strahlungsquelle 302 hindurch transportiert wird. Beispielsweise sind die jeweiligen LED-UV-Strahlungsquellen 302 hinsichtlich der ausgesendeten Strahlungsleistung nicht nur einschaltbar, sondern mit unterschiedlichen wählbaren Intensitätsbereichen betreibbar.

Bevorzugt weist die Bogenbearbeitungsmaschine 01 zumindest eine Kühleinrichtung 301 auf, die zumindest ein Kühlelement 303 aufweist, das weiter bevorzugt ein Leitungssystem aufweist, das zum Transport von Kühlflüssigkeit von dieser Kühlflüssigkeit durchströmbar ist. Bevorzugt ist entlang des für den Transport von Bogen 02 vorgesehenen Transportwegs nach der zumindest einen Auftragstelle 201 zumindest eine Kühleinrichtung 301 angeordnet, die zumindest ein als Kühlzylinder 303 ausgebildetes Kühlelement 303 aufweist. Bevorzugt ist entlang des für den Transport von Bogen 02 vorgesehenen Transportwegs nach der zumindest einen Auftragstelle 201 und vor dem zumindest einen Kühlzylinder 303 die Aushärtevorrichtung 300 insbesondere zum Aushärten des aufgetragenen Materials angeordnet. Insbesondere ist bevorzugt der Aushärtevorrichtung 300 zumindest eine Kühleinrichtung 301 zugeordnet, die zumindest ein Kühlelement 303 aufweist, das weiter bevorzugt ein Leitungssystem aufweist, das zum Transport von Kühlflüssigkeit von dieser Kühlflüssigkeit durchströmbar ist. Insbesondere ist zumindest ein Kühlabschnitt des für den Transport von Bogen 02 vorgesehenen Transportwegs durch zumindest einen Einwirkbereich des zumindest einen Kühlelements 303 festgelegt. Dieser Kühlabschnitt ist beispielsweise derjenige Abschnitt des für den Transport von Bogen 02 vorgesehenen Transportwegs, der sich mit einem Einwirkbereich der Kühleinrichtung 301 überschneidet, beispielsweise weil dort insbesondere bogenförmiges Substrat 02 durch einen Kontakt mit dem zumindest einen Kühlelement 303 der zumindest einen Kühleinrichtung 301 abgekühlte werden kann. Bevorzugt ist jeglicher Kühlabschnitt nach jeglichem Aushärteabschnitt angeordnet. Insbesondere ist die zumindest eine Kühleinrichtung 301 entlang des für den Transport von Bogen 02 vorgesehenen Transportwegs nach einem Einwirkbereich der zumindest einen LED-UV-Strahlungsquelle 302 angeordnet und bevorzugt nach dem Einwirkbereich jeder LED-UV-Strahlungsquelle 302.

Das zumindest eine Kühlelement 303 ist bevorzugt als rotierbarer Kühlzylinder 303 ausgebildet. Bevorzugt weist die Kühleinrichtung 301 genau einen Kühlzylinder 303 auf. Dieser zumindest eine und bevorzugt genau eine Kühlzylinder 303 weist bevorzugt zumindest ein Greifersystem 342 zum Greifen von Bogen 02 auf. Der Kühlzylinder 303 ist bevorzugt aktiv angetrieben. Beispielsweise ist der zumindest eine Kühlzylinder 303 über ein Getriebe und/oder einen dem Kühlzylinder 303 zugeordneten Antrieb rotierbar angeordnet.

Bevorzugt weist die zumindest eine Auftrageinrichtung 200 zumindest einen insbesondere zum Tragen zumindest einer Druckform ausgebildeten Formzylinder 202 auf. Ein wirksamer Umfang des zumindest einen Kühlzylinders 303 entspricht bevorzugt einem ganzzahligen Vielfachen eines wirksamen Umfangs dieses zumindest einen Formzylinders 202. Dabei ist unter einem ganzzahligen Vielfachen insbesondere eine Verdopplung, Verdreifachung oder Vervierfachung zu verstehen und insbesondere nicht ein gleicher wirksamer Umfang.

Auch wenn der Kühlzylinder 303 im Vorangegangenen und im Folgenden nur als Kühlzylinder 303 beschrieben ist, so ist er prinzipiell als Temperierzylinder 303 einsetzbar. Der Kühlzylinder 303 weist bevorzugt zumindest einen Zylinderballen 326 und zwei an dessen Enden angeordnete Zylinderzapfen 336; 337 auf. Bevorzugt ist dem Zylinderballen 326 eine Zylinderachse 308 zugeordnet, die insbesondere als dessen Rotationsachse 308 dient. Der Kühlzylinder 303 weist bevorzugt ein zur Durchleitung von insbesondere als Kühlmittel ausgebildetem Temperierungsmittel ausgebildetes Leitungssystem 333 auf. Der Zylinderballen 326 weist bevorzugt zumindest einen bevorzugt im Wesentlichen rohrförmigen Grundkörper 327 auf. Unter einem im Wesentlichen rohrförmigen Grundkörper 327 ist dabei ein sich entlang der Zylinderachse 308 erstreckender Grundkörper 327 zu verstehen, dessen Querschnitt bei einer Schnittdarstellung mit einer Ebene orthogonal zur Zylinderachse 308 eine im Wesentlichen, also zu mindestens 70 % kreisförmige Außenbegrenzung aufweist. Der Grundkörper 327 besteht bevorzugt zu zumindest 50 %, weiter bevorzugt zu zumindest 70 %, noch weiter bevorzugt zu zumindest 85 %, noch weiter bevorzugt zu zumindest 90 % und noch weiter bevorzugt zu zumindest 95 % aus Aluminium. Bevorzugt ist der Grundkörper 327 aus einer Aluminiumlegierung gefertigt. Diese Aluminiumlegierung weist neben Aluminium beispielsweise zumindest Anteile von Silizium und/oder Eisen und/oder Kupfer und/oder Mangan und/oder Magnesium und/oder Chrom und/oder Zink und/oder Titan auf. Beispielsweise ist der Grundkörper 327 aus einem Werkstoff gemäß EN AW-5083 gefertigt. Der Grundkörper 327 weist an seiner Außenfläche 328 bevorzugt eine durch Eloxieren erzeugte Schicht auf, die weiter bevorzugt als harteloxierte Schicht nach ISO 10074 ausgebildet ist und/oder eine Schichtdicke von zumindest 25 µm und/oder höchstens 100 µm aufweist und die weiter bevorzugt eine Schichtdicke von zumindest 40 µm und/oder höchstens 60 µm aufweist.

Eine Außenfläche 328 des Zylinderballens 326 weist bevorzugt zumindest einen Transportbereich 329 aufweist, der als Auflagefläche 329 für bogenförmiges Substrat 02 ausgebildet ist. Dieser zumindest eine Transportbereich 329 weist beispielsweise die Form eines Teils einer Zylindermantelfläche 329 auf. Die Außenfläche 328 des Zylinderballens 326 weist bevorzugt zumindest einen Zylinderkanal 331 auf, in dem zumindest ein ein Greifersystem 342 aufweisendes Haltemittel 332 zum Halten von bogenförmigem Substrat 02 angeordnet ist. Das Greifersystem 342 weist bevorzugt in bekannter Weise bewegbare Greiferfinger auf, die gegen entsprechende Kontaktflächen pressbar sind, um beispielsweise Vorderkanten von Bogen einzuklemmen. Das zumindest eine Greifersystem 342 ist beispielsweise über ein Getriebe steuerbar, das zumindest einen Abtaster 344 und zumindest eine Kurvenscheibe 343 aufweist. Bevorzugt weist der Kühlzylinder 303 zur Steuerung des Greifersystems 342 und insbesondere der Greiferfinger des zumindest einen Haltemittels 332 zumindest ein zum Zusammenwirken mit einer Kurvenscheibe 343 ausgebildetes Abtastmittel 344 auf. Eine solche Kurvenscheibe 343 ist bevorzugt Bestandteil der Bogenbearbeitungsmaschine 01. Bevorzugt weist der Zylinderkanal zwei derartige Zylinderkanäle 331 mit entsprechenden Haltemitteln 332 auf. Beispielsweise ist der zumindest eine Zylinderkanal 331 als in den Grundkörper 327 eingefräster Zylinderkanal 331 ausgebildet.

Der insbesondere rohrförmige Grundkörper 327 weist bevorzugt eine Mehrzahl von als Bohrungen 334 ausgeführten Strömungsleitungen 334 auf, die sich parallel zu der Zylinderachse 308 erstrecken und die als Bestandteile des Leitungssystems 333 ausgebildet sind. Diese Bohrungen 334 sind weiter bevorzugt als Tieflochbohrungen 334 ausgeführt. Bevorzugt erstrecken sich die insbesondere als Bohrungen 334 ausgeführten Strömungsleitungen 334 parallel zu der Zylinderachse 308 über den gesamten Grundkörper 327. Dies gilt für eine Mehrzahl und weiter bevorzugt für jede einzelne dieser Strömungsleitungen 334. Bevorzugt liegen zumindest 50 %, weiter bevorzugt zumindest 75 % und noch weiter bevorzugt zumindest 85 % aller Bestandteile aller Auflageflächen 329 des Kühlzylinders 303 höchstens 30 mm einer nächsten Strömungsleitung 334 entfernt.

Bevorzugt weist der Grundkörper 327 einen inneren Hohlraum 347 auf, der weiter bevorzugt zylinderförmig ausgebildet ist und der sich insbesondere parallel zu der Zylinderachse 308 über den gesamten Grundkörper 327 erstreckt. Eine orthogonal zu der Zylinderachse 308 orientierte Abmessung 348 dieses Hohlraums 347 und insbesondere dessen Durchmesser 348 beträgt bevorzugt zumindest 50 %, weiter bevorzugt zumindest 60 % und noch weiter bevorzugt zumindest 70 % eines maximalen Außendurchmessers 349 des Grundkörpers 327. Beispielsweise Beträgt der Außendurchmesser 349 zwischen 500 mm und 600 mm, weiter bevorzugt zwischen 550 mm und 570 mm. Beispielsweise beträgt die orthogonal zu der Zylinderachse 308 orientierte Abmessung 348 dieses Hohlraums 347 und insbesondere dessen Durchmesser zwischen 350 mm und 480 mm, weiter bevorzugt zwischen 400 mm und 430 mm. Beispielsweise beträgt eine Wandstärke des Grundkörpers 327 zwischen 50 mm und 100 mm, weiter bevorzugt zwischen 65 mm und 80 mm. Bevorzugt beträgt ein Durchmesser der Mehrzahl von als Bohrungen 334 ausgeführten Strömungsleitungen 334 jeweils zwischen 10 mm und 30 mm, weiter bevorzugt zwischen 18 mm und 24 mm.

Bevorzugt weist der Kühlzylinder 303 an zumindest einem und weiter bevorzugt genau einem Zylinderzapfen 336 eine Drehdurchführung 338 für Temperierungsmittel auf. Bevorzugt weist der Kühlzylinder 303 an zumindest einem und weiter bevorzugt genau einem Zylinderzapfen 337 ein Zahnrad 346 auf. Bevorzugt ist an genau einem Zylinderzapfen 336 eine Drehdurchführung 338 angeordnet und ist genau an dem gegenüberliegenden Zylinderzapfen 337 ein Zahnrad 346 angeordnet.

Der Zylinderballen 326 weist bevorzugt zumindest zwei Endstücke 339; 341 auf, die jeweils Leitungsabschnitte 351; 352 enthalten und mit den Strömungsleitungen 334 des rohrförmigen Grundkörpers 327 strömungstechnisch verbunden sind. Beispielsweise ist einer dieser Leitungsabschnitte direkt mit der Drehdurchführung 338 verbunden. Bevorzugt schließen die Endstücke 339; 341 den inneren Hohlraum 347 ab.

Bevorzugt weist die Bogenbearbeitungsmaschine 01 zumindest einen Antriebsmotor auf. Bevorzugt ist dieser zumindest eine Antriebsmotor in Drehmoment übertragender oder zu übertragen fähiger Weise mit dem zumindest einen Zahnrad 346 verbunden angeordnet, beispielsweise über zumindest ein Zahnrad und/oder zumindest eine Kette und/oder zumindest einen Riemen. Bevorzugt ist dieser zumindest eine Antriebsmotor in Drehmoment übertragender oder zu übertragen fähiger Weise mit dem zumindest einen Formzylinder 202 der zumindest einen Auftrageinrichtung 200 verbunden angeordnet, beispielsweise über zumindest ein Zahnrad und/oder zumindest eine Kette und/oder zumindest einen Riemen

Der zumindest eine Kühlzylinder 303 weist bevorzugt zumindest eine Zuführeinrichtung 338 auf, die beispielsweise als zumindest eine Drehdurchführung 338 ausgebildet ist. Die zumindest eine Zuführeinrichtung ist bevorzugt als Gaszuführung und/oder Gasabführung und/oder Flüssigkeitszuführung und/oder Flüssigkeitsabführung ausgebildet. Die zumindest eine Zuführeinrichtung dient bevorzugt einer Zufuhr und/oder Abfuhr von Gas und/oder zumindest einer Temperierflüssigkeit, insbesondere Kühlflüssigkeit. Bevorzugt ist die zumindest eine Zuführeinrichtung als zumindest eine Drehzuführung ausgebildet.

Die Bogenbearbeitungsmaschine 01 weist bevorzugt das insbesondere als erstes Kettenfördersystem 304 und weiter bevorzugt Kettengreifersystem 304 ausgebildete vorgeordnete Bogentransportmittel 304 auf, das weiter bevorzugt zumindest eine hintere Kettenumlenkwelle 306 aufweist. Entlang des für den Transport von Bogen 02 vorgesehenen Transportwegs nach der zumindest einen Auftrageinrichtung 200 und der zumindest einen Kühleinrichtung 301 ist bevorzugt zumindest ein auch als vorgeordnetes Bogentransportmittel 304 bezeichnetes Bogentransportmittel 304 angeordnet. Das vorgeordnete Bogentransportmittel 304 weist bevorzugt zumindest ein Greifersystem zum Greifen von Bogen 02 auf. Das vorgeordnete Bogentransportmittel 304 ist in einer Ausführungsform beispielsweis als Transportzylinder ausgebildet. Bevorzugt ist das vorgeordnete Bogentransportmittel 304 als insbesondere erstes Kettenfördersystem 304 oder erstes Kettengreifersystem 304 ausgebildet und weist weiter bevorzugt zumindest eine hintere Kettenumlenkwelle 306 auf. Bevorzugt ist ein jeweiliger Einwirkbereich der zumindest einen und bevorzugt jeder insbesondere als UV-Strahlungsquelle 302 und//oder LED-UV-Strahlungsquelle 302 ausgebildeten Strahlungsquelle 302 der Aushärtevorrichtung 300 auf einen solchen Abschnitt des für den Transport von Bogen 02 vorgesehenen Transportwegs ausgerichtet angeordnet, der durch das vorgeordnete Bogentransportmittel 304, insbesondere das erste Kettenfördersystem 304 festgelegt ist. Insbesondere ist bevorzugt der Aushärteabschnitt zumindest teilweise und weiter bevorzugt vollständig durch das zumindest eine bevorzugt als erstes Kettenfördersystem 304 ausgebildete vorgeordnete Bogentransportmittel 304 festgelegt.

Bevorzugt ist eine insbesondere erste Übergabestelle 309 zur insbesondere direkten Übergabe von Bogen 02 von dem vorgeordneten Bogentransportmittel 304 an das insbesondere als Kühlzylinder 303 ausgebildete Kühlelement 303 festgelegt. In dem Fall, in dem das vorgeordnete Bogentransportmittel 304 als insbesondere erstes Kettenfördersystem 304 ausgebildet ist, ist die insbesondere erste Übergabestelle 309 zur Übergabe von Bogen 02 von dem ersten Kettenfördersystem 304 an das als Kühlzylinder 303 ausgebildete Kühlelement 303 bevorzugt im Bereich der hinteren Kettenumlenkwelle 306 des ersten Kettenfördersystems 304 festgelegt.

Bevorzugt weist also die Bogenbearbeitungsmaschine 01 ein erstes Kettenfördersystem 304 auf, das zumindest eine hintere Kettenumlenkwelle 306 aufweist, wobei im Bereich der hinteren Kettenumlenkwelle 306 des ersten Kettenfördersystems 304 die insbesondere erste Übergabestelle 309 zur Übergabe von Bogen 02 von dem ersten Kettenfördersystem 304 an das als Kühlzylinder 303 ausgebildete Kühlelement 303 festgelegt ist. Bevorzugt ist eine Rotationsachse 308 des als Kühlzylinder 303 ausgebildeten Kühlelements 303 auf eine vertikale Richtung V bezogen niedriger angeordnet als eine Rotationsachse 306 der hinteren Kettenumlenkwelle 306 des ersten Kettenfördersystems 304.

Die Bogenbearbeitungsmaschine 01 weist bevorzugt zumindest eine Inspektionsvorrichtung 400 auf, die auf einen Bereich des für den Transport von Bogen 02 vorgesehenen Transportwegs ausgerichtet angeordnet ist, der nach dem zumindest einen Kühlelement 303 angeordnet ist. Dieser Bereich wird auch als Inspektionsbereich bezeichnet. Die zumindest eine Inspektionsvorrichtung 400 weist bevorzugt eine erste Inspektionseinrichtung 401 insbesondere zur Inspektion einer ersten Seite von Bogen 02 auf. Bevorzugt, insbesondere im Fall einer Bogenbearbeitungsmaschine 01 zur beidseitigen Bearbeitung von Bogen 02, weist die zumindest eine Inspektionsvorrichtung 400 eine zweite Inspektionseinrichtung 402 insbesondere zur Inspektion einer zweiten Seite von Bogen 02 auf. weist Der für den Transport von Bogen 02 vorgesehene Transportweg verläuft dann zwischen der ersten Inspektionseinrichtung 401 und der zweiten Inspektionseinrichtung 402 hindurch.

Die erste Inspektionseinrichtung 401 weist bevorzugt zumindest eine Sensoreinrichtung zur Erfassung von elektromagnetischer Strahlung im sichtbaren Bereich des Spektrums auf. Bevorzugt weist die erste Inspektionseinrichtung 401 alternativ oder weiter bevorzugt zusätzlich zumindest eine Sensoreinrichtung zur Erfassung von elektromagnetischer Strahlung in einem ersten Abschnitt des Infrarotbereichs des Spektrums auf. Weiter bevorzugt weist die erste Inspektionseinrichtung 401 insbesondere zusätzlich zu der Sensoreinrichtung zur Erfassung von elektromagnetischer Strahlung im sichtbaren Bereich des Spektrums zumindest zwei Sensoreinrichtungen zur Erfassung von elektromagnetischer Strahlung im Infrarotbereich des Spektrums auf, wobei diese beiden Sensoreinrichtungen sich hinsichtlich des von ihnen erfassbaren Wellenlängenbereichs unterscheiden.

Die zweite Inspektionseinrichtung 402 weist bevorzugt zumindest eine Sensoreinrichtung zur Erfassung von elektromagnetischer Strahlung im sichtbaren Bereich des Spektrums auf. Bevorzugt weist die zweite Inspektionseinrichtung 402 alternativ oder weiter bevorzugt zusätzlich zumindest eine Sensoreinrichtung zur Erfassung von elektromagnetischer Strahlung in einem ersten Abschnitt des Infrarotbereichs des Spektrums auf. Weiter bevorzugt weist die zweite Inspektionseinrichtung 401 insbesondere zusätzlich zu der Sensoreinrichtung zur Erfassung von elektromagnetischer Strahlung im sichtbaren Bereich des Spektrums zumindest zwei Sensoreinrichtungen zur Erfassung von elektromagnetischer Strahlung im Infrarotbereich des Spektrums auf, wobei diese beiden Sensoreinrichtungen sich hinsichtlich des von ihnen erfassbaren Wellenlängenbereichs unterscheiden.

Bevorzugt weist die erste Inspektionseinrichtung 401 zumindest eine Kamera und/oder zumindest einen Contact Image Sensor auf und/oder weist die zweite Inspektionseinrichtung 402 zumindest eine Kamera und/oder zumindest einen Contact Image Sensor auf. Bevorzugt weist die erste Inspektionseinrichtung 401 zumindest eine erste Beleuchtungseinrichtung auf und/oder weist die zweite Inspektionseinrichtung 402 zumindest eine zweite Beleuchtungseinrichtung auf. Diese sind bevorzugt auf den zu erfassenden Teil des Spektrums abgestimmt.

Der ersten Inspektionseinrichtung 401 ist bevorzugt ein erster Inspektionstransportkörper 403 zugeordnet, auf den zumindest eine Sensoreinrichtung der ersten Inspektionseinrichtung 401 ausgerichtet angeordnet ist. Dieser erste Inspektionstransportkörper 403 ist bevorzugt als insbesondere erster Inspektionstransportzylinder 403 ausgebildet. Bevorzugt ist entlang des für den Transport von Bogen 02 vorgesehenen Transportwegs nach dem zumindest einen Kühlelement 303 zumindest ein erster, insbesondere als erster Inspektionstransportzylinder 403 ausgebildeter Inspektionstransportkörper 403 angeordnet, auf den zumindest eine Sensoreinrichtung einer ersten Inspektionseinrichtung 401 ausgerichtet angeordnet ist. Der bevorzugt als erster Inspektionstransportzylinder 403 ausgebildete erste Inspektionstransportkörper 403 weist bevorzugt zumindest ein Greifersystem zum Greifen von Bogen 02 auf. Alternativ oder bevorzugt zusätzlich ist der erste Inspektionstransportzylinder 403 bevorzugt als Saugtransportzylinder 403 ausgebildet. Unter einem Saugtransportzylinder 403 ist dabei insbesondere ein Zylinder zu verstehen, der zum Transport von insbesondere bogenförmigem Substrat 02 auf seiner Mantelfläche ausgebildet ist und auf dieser Mantelfläche eine Mehrzahl von Saugöffnungen aufweist, die mit einer Unterdruckquelle verbunden und/oder verbindbar angeordnet sind.

Der zweiten Inspektionseinrichtung 402 ist bevorzugt ein zweiter Inspektionstransportkörper 404 zugeordnet, auf den zumindest eine Sensoreinrichtung der zweiten Inspektionseinrichtung 402 ausgerichtet angeordnet ist. Dieser zweite Inspektionstransportkörper 404 ist bevorzugt als insbesondere zweiter Inspektionstransportzylinder 404 ausgebildet. Der bevorzugt als zweiter Inspektionstransportzylinder 404 ausgebildete Inspektionstransportkörper 404 weist bevorzugt zumindest ein Greifersystem zum Greifen von Bogen 02 auf. Alternativ oder bevorzugt zusätzlich ist der zweite Inspektionstransportzylinder 404 als Saugtransportzylinder 404 ausgebildet.

Bevorzugt weist die Bogenbearbeitungsmaschine 01 eine insbesondere zweite Übergabestelle 311 zur Übergabe von Bogen 02 von dem bevorzugt als Kühlzylinder 303 ausgebildeten Kühlelement 303 an den bevorzugt als erster Inspektionstransportzylinder 403 ausgebildeten ersten Inspektionstransportkörper 403 auf. Bevorzugt weist die Bogenbearbeitungsmaschine 01 eine insbesondere dritte Übergabestelle 312 zur Übergabe von Bogen 02 von dem insbesondere als erster Inspektionstransportzylinder 403 ausgebildeten ersten Inspektionstransportkörper 403 an den insbesondere als zweiter Inspektionstransportzylinder 404 ausgebildeten zweiten Inspektionstransportkörper 404 auf. Bevorzugt ist eine Rotationsachse 313 des ersten Inspektionstransportkörpers 403 und insbesondere des ersten Inspektionstransportzylinders 403 auf eine vertikale Richtung V bezogen niedriger angeordnet als eine Rotationsachse 308 des bevorzugt als Kühlzylinder 303 ausgebildeten Kühlelements 303. Bevorzugt ist eine Rotationsachse 314 des insbesondere als zweiter Inspektionstransportzylinder 404 ausgebildeten zweiten Inspektionstransportkörpers 404 auf die vertikale Richtung V bezogen niedriger angeordnet als die Rotationsachse 313 des insbesondere als erster Inspektionstransportzylinder 403 ausgebildeten ersten Inspektionstransportkörpers 403.

Entlang des für den Transport von Bogen 02 vorgesehenen Transportwegs nach der Inspektionsvorrichtung 400, insbesondere nach der ersten Inspektionseinrichtung 401 und weiter bevorzugt nach der zweiten Inspektionseinrichtung 402 ist bevorzugt zumindest ein auch als nachgeordnetes Bogentransportmittel 506 bezeichnetes Bogentransportmittel 506 angeordnet. Das nachgeordnete Bogentransportmittel 506 weist bevorzugt zumindest ein Greifersystem zum Greifen von Bogen 02 auf. Das nachgeordnete Bogentransportmittel 506 ist in einer Ausführungsform beispielsweis als Transportzylinder ausgebildet. Bevorzugt ist das nachgeordnete Bogentransportmittel 506 als insbesondere zweites Kettenfördersystem 506, insbesondere Kettengreifersystem 506 ausgebildet und weist weiter bevorzugt zumindest eine vordere Kettenumlenkwelle 317 auf. Das zweite Kettenfördersystem 506 dient bevorzugt der Zufuhr von Bogen 02 bis zu einer jeweils zugeordneten Abgabestation 501; 502; 503; 504 der Substratabgabeeinrichtung 500.

Bevorzugt ist eine insbesondere vierte Übergabestelle 316 zur insbesondere direkten Übergabe von Bogen 02 von einem Inspektionstransportkörper 403; 404 und insbesondere von dem zweiten Inspektionstransportkörper 404 an das nachgeordnete Bogentransportmittel 506 festgelegt. In dem Fall, in dem das nachgeordnete Bogentransportmittel 506 als insbesondere zweites Kettenfördersystem 506 bzw. Kettengreifersystem 506 ausgebildet ist, ist die insbesondere vierte Übergabestelle 316 zur Übergabe von Bogen 02 von einem Inspektionstransportkörper 403; 404 und insbesondere von dem zweiten Inspektionstransportkörper 404 an das insbesondere zweite Kettenfördersystem 506 bevorzugt im Bereich der vorderen Kettenumlenkwelle 317 des insbesondere zweiten Kettenfördersystems 506 festgelegt. Bevorzugt weist die Bogenbearbeitungsmaschine 01 die vierte Übergabestelle 316 zur Übergabe von Bogen 02 von dem insbesondere als zweiter Inspektionstransportzylinder 404 ausgebildeten zweiten Inspektionstransportkörper 404 an die vordere Kettenumlenkwelle 317 eines zweiten Kettenfördersystems 506 auf. Bevorzugt ist eine Rotationsachse 318 der vorderen Kettenumlenkwelle 317 des zweiten Kettenfördersystems 506 auf eine vertikale Richtung V bezogen niedriger angeordnet ist als eine Rotationsachse 314 des insbesondere als zweiter Inspektionstransportzylinder 404 ausgebildeten zweiten Inspektionstransportkörpers 404.

Die Bogenbearbeitungsmaschine 01 weist bevorzugt die zumindest eine bevorzugt als Auslagevorrichtung 500, insbesondere Bogenauslage 500 ausgebildete Substratabgabeeinrichtung 500 auf, insbesondere zusätzlich zu der zumindest einen Auftrageinrichtung 100 und/oder zusätzlich zu der zumindest einen Aushärtevorrichtung 300 und/oder zusätzlich zu der zumindest einen Inspektionsvorrichtung 400 und/oder entlang des für den Transport von Bogen 02 vorgesehenen Transportwegs nach der zumindest einen und weiter bevorzugt nach jeder Auftrageinrichtung 100 und/oder nach der zumindest einen Aushärtevorrichtung 300 und/oder nach der zumindest einen Kühleinrichtung 301 und/oder nach der zumindest einen Inspektionsvorrichtung 400. Die Bogenauslage 500 enthält bevorzugt zumindest teilweise ein Bogenfördersystem 506, welches insbesondere als Kettenfördersystem 506 ausgebildet ist. Dieses Kettenfördersystem 506 ist bevorzugt identisch mit dem zweiten Kettengreifersystem 506, an das Bogen 02 von der Inspektionsvorrichtung 400 und insbesondere von einem Inspektionstransportkörper 403; 404 übergeben werden.

Das Bogenfördersystem 506 enthält beispielsweise über Antriebs- und Umlenkmittel bewegte Zugmittel, die Greifeinrichtungen zur Bogenförderung antreiben. Die Greifeinrichtungen weisen Fixierorgane zur Übernahme und Fixierung der Bogen 02 auf. Als Fixierorgane können insbesondere Klemm- und/oder Sauggreifer zum Greifen der Bogenkanten eingesetzt werden. Mittels der Bogenauslage 500 werden die Bogen 02 bevorzugt auf zumindest eine oder weiter bevorzugt eine von mehreren beispielsweise als Palette oder anders gearteten Transportunterlagen in Form eines jeweiligen Auslagestapel abgelegt. Beispielsweise ist in der Bogenauslage 500 eine Bogenleitvorrichtung angeordnet. Vor dem entsprechenden Auslagestapel ist bevorzugt eine jeweilige Bremseinrichtung zur Verzögerung der von den Greifereinrichtungen freigegebenen Bogen 02 angeordnet. Die von der Bremseinrichtung verzögerten Bogen 02 legen sich an Vorderanschlägen an und werden so ausgerichtet auf dem jeweiligen Auslagestapel abgelegt. Der jeweilige Auslagestapel wird vorzugsweise von einem Stapelhubantrieb um die jeweils abgelegte Bogenstärke abgesenkt, so dass die Stapeloberfläche ein stets annähernd konstantes Niveau einnimmt.

Beispielsweise ist die Bogenauslage 500 mit einer Nonstop-Einrichtung für einen unterbrechungsfreien Abtransport von Auslagestapeln ausgerüstet. Diese umfasst vorwiegend einen Hilfsstapelträger. Alternativ oder zusätzlich weist die Auslagevorrichtung 500 entlang des für den Transport des Substrats 02 und/oder der Bogen 02 vorgesehenen Transportwegs zumindest zwei, weiter bevorzugt zumindest drei und noch weiter bevorzugt zumindest vier insbesondere entlang des für den Transport von Bogen 02 vorgesehenen Transportwegs hintereinander angeordnete Abgabestationen 501; 502; 503; 504 auf. Die zumindest eine Auslagevorrichtung 500 ist also bevorzugt als Mehrfachstapelauslage 500, insbesondere zumindest als Doppelstapelauslage 500 oder zumindest als Dreifachstapelauslage 500 oder zumindest als Vierfachstapelauslage 500 ausgebildet. Die Abgabestationen 501; 502; 503; 504 werden auch Stapelauslagen 501; 502; 503; 504 genannt. Unter einer jeweiligen Abgabestation 501; 502; 503; 504 oder Stapelauslage 501; 502; 503; 504 ist dabei insbesondere eine Einrichtung zu verstehen, die zur Bildung eines jeweiligen Stapels dient. Mittels der zumindest zwei bzw. zumindest drei bzw. zumindest vier Abgabestationen 501; 502; 503; 504 können also zumindest zwei bzw. drei bzw. vier unterschiedliche Auslagestapel gebildet werden, ohne jeweils einen anderen Stapel entfernen zu müssen. Die Mehrfachstapelauslage 500 kann auch fünf oder noch mehr Abgabestationen 501; 502; 503; 504 oder Stapelauslagen 501; 502; 503; 504 aufweisen.

Bevorzugt ist die zumindest eine Aushärtevorrichtung 300 und/oder die zumindest eine Kühleinrichtung 301 und/oder die zumindest eine Inspektionsvorrichtung 400 entlang des für den Transport von Substrat 02 vorgesehenen Transportwegs vor jeder Abgabestationen 501; 502; 503; 504 der Auslagevorrichtung 500 angeordnet.

Bevorzugt weist die Bogenbearbeitungsmaschine 01 ein Aushärte- und Inspektionsmodul 600 auf. Das Aushärte- und Inspektionsmodul 600 weist bevorzugt die Aushärtevorrichtung 300 auf. Das Aushärte- und Inspektionsmodul 600 weist bevorzugt das zumindest eine als Kühlzylinder 303 ausgebildete Kühlelement 303 auf. Das Aushärte- und Inspektionsmodul 600 weist bevorzugt die zumindest eine Inspektionsvorrichtung 400 auf. Weiter bevorzugt weist das Aushärte- und Inspektionsmodul 600 die Aushärtevorrichtung 300 auf und das zumindest eine als Kühlzylinder 303 ausgebildete Kühlelement 303 und die zumindest eine Inspektionsvorrichtung 400 auf. Bevorzugt weist das Aushärte- und Inspektionsmodul 600 ein eigenes Maschinengestell 601; 602; 603 auf, das insbesondere von Maschinengestellteilen anderer Bereich der Bogenbearbeitungsmaschine 01 getrennt und/oder abtrennbar ist.

Das Maschinengestell 601; 602; 603 des Aushärte- und Inspektionsmoduls 600 weist beispielsweise einen ersten Gestellabschnitt 601, einen zweiten Gestellabschnitt 602 und einen dritten Gestellabschnitt 603 auf. Bevorzugt sind die drei Gestellabschnitte 601; 602; 603 zumindest im Betrieb starr miteinander verbunden. Beispielsweise weist jeder dieser Gestellabschnitte 601; 602; 603 jeweils zwei Gestellseitenwände auf. Der erste Gestellabschnitt 601 ist bevorzugt entlang des für den Transport von Bogen 02 vorgesehenen Transportwegs vor dem zweiten Gestellabschnitt 602 angeordnet. Der zweite Gestellabschnitt 602 ist bevorzugt entlang des für den Transport von Bogen 02 vorgesehenen Transportwegs vor dem dritten Gestellabschnitt 603 angeordnet.

Beispielsweise ist der erste Gestellabschnitt 601 zumindest eine und bevorzugt jede Sensoreinrichtung der ersten Inspektionseinrichtung 401 der Inspektionsvorrichtung 400 tragend angeordnet. Beispielsweise ist der erste Gestellabschnitt 601 zumindest eine und bevorzugt jede insbesondere als LED-UV-Strahlungsquelle 302 ausgebildete Strahlungsquelle 302 der Aushärtevorrichtung 300 tragend angeordnet. Beispielsweise ist der dritte Gestellabschnitt 603 zumindest eine und bevorzugt jede Sensoreinrichtung der zweiten Inspektionseinrichtung 402 der Inspektionsvorrichtung 400 tragend angeordnet. Beispielsweise ist an dem zweiten Gestellabschnitt 602 eine Rotationsachse 308 des insbesondere als Kühlzylinder 303 ausgebildeten Kühlelements 303 und eine Rotationsachse 313 des ersten Inspektionstransportzylinders 403 und eine Rotationsachse 314 des zweiten Inspektionstransportzylinders 404 angeordnet. Beispielsweise ist an dem zweiten Gestellabschnitt 602 die Rotationsachse 307 der hinteren Kettenumlenkwelle 306 des ersten Kettenfördersystems 304 und/oder die Rotationsachse 318 der vorderen Kettenumlenkwelle 317 des zweiten Kettenfördersystems 506 angeordnet. Beispielsweise ist der erste Gestellabschnitt 601 einen Teil eines Führungssystems des ersten Kettenfördersystems 304 tragend angeordnet. Beispielsweise ist der dritte Gestellabschnitt 603 einen Teil eines Führungssystems des zweiten Kettenfördersystems 506 tragend angeordnet. Beispielsweise trägt das Maschinengestell 601; 602; 603 des Aushärte- und Inspektionsmoduls 600 zumindest sämtliche Bauteile, die den für den Transport von Bogen 02 vorgesehenen Transportweg zwischen der ersten Übergabestelle 309 und der vierten Übergabestelle 616 festlegen.

Der für den Transport von insbesondere zumindest teilweise vereinzelten Bogen 02 vorgesehene Transportweg beginnt bevorzugt an der Substratzufuhreinrichtung 100 und/oder endet bevorzugt an der Bogenauslage 500. Mehrere Bogen 02 aufweisende Stapel werden bevorzugt der Substratzufuhreinrichtung 100 zugeführt und/oder der Bogenauslage 500 entnommen. Der Transportweg dieser Stapel soll nicht zum für den Transport von Bogen 02 vorgesehenen Transportweg gezählt werden.

### Bezugszeichenliste

- 01: Bogenbearbeitungsmaschine, Druckmaschine, Rotations-Druckmaschine, Bogen-Rotationsdruckmaschine, Bogendruckmaschine, Wertpapier-Bogenbearbeitungsmaschine, Wertpapier-Bogendruckmaschine
- 02: Substrat, Bedruckstoff, Bogen

- 100: Substratzufuhreinrichtung, Bogenanleger, Bogenzufuhreinrichtung, Bedruckstofffzufuhreinrichtung

- 200: Bearbeitungseinrichtung, Bogenbearbeitungseinrichtung Auftrageinrichtung, Druckeinheit, Simultandruckeinheit, Simultan-Doppeldruckeinheit
- 201: Bearbeitungsstelle, Auftragstelle, Druckstelle
- 202: Formzylinder, Plattenzylinder
- 203: Druckwerk, Flachdruckwerk, Offsetdruckwerk, Hochdruckwerk, Stahlstichdruckwerk
- 204: Übertragungszylinder, Sammelzylinder, Gummituchzylinder

- 300: Aushärtevorrichtung
- 301: Kühleinrichtung
- 302: Strahlungsquelle, UV-Strahlungsquelle, LED-UV-Strahlungsquelle
- 303: Kühlelement, Kühlzylinder
- 304: Bogentransportmittel, Kettenfördersystem, Kettengreifersystem, vorgeordnetes, erstes
- 305: -
- 306: Kettenumlenkwelle, hintere (304)
- 307: Rotationsachse (306)
- 308: Zylinderachse, Rotationsachse (303)
- 309: Übergabestelle, erste
- 310: -
- 311: Übergabestelle, zweite
- 312: Übergabestelle, dritte
- 313: Rotationsachse (403)
- 314: Rotationsachse (404)
- 315: -
- 316: Übergabestelle, vierte
- 317: Kettenumlenkwelle, vordere (506)
- 318: Rotationsachse (317)
- 319: -
- 320: -
- 321: Aushärteeinrichtung, erste
- 322: Aushärteeinrichtung, zweite
- 323: -
- 324: -
- 325: -
- 326: Zylinderballen (303)
- 327: Grundkörper (303)
- 328: Außenfläche (326)
- 329: Transportbereich, Zylindermantelfläche
- 330: -
- 331: Zylinderkanal (303)
- 332: Haltemittel
- 333: Leitungssystem
- 334: Strömungsleitung, Bohrung, Tieflochbohrung
- 335: -
- 336: Zylinderzapfen
- 337: Zylinderzapfen
- 338: Zuführeinrichtung, Drehdurchführung
- 339: Endstück
- 340: -
- 341: Endstück
- 342: Greifersystem
- 343: Kurvenscheibe
- 344: Abtastmittel
- 345: -
- 346: Zahnrad
- 347: Hohlraum
- 348: Abmessung, Durchmesser
- 349: Außendurchmesser
- 350: -
- 351: Leitungsabschnitt
- 352: Leitungsabschnitt

- 400: Inspektionsvorrichtung
- 401: Inspektionseinrichtung, erste
- 402: Inspektionseinrichtung, zweite
- 403: Inspektionstransportkörper, Inspektionstransportzylinder, Saugtransportzylinder, erster
- 404: Inspektionstransportkörper, Inspektionstransportzylinder, Saugtransportzylinder, zweiter

- 500: Substratabgabeeinrichtung, Auslagevorrichtung, Bogenauslage, Mehrfachstapelauslage, Doppelstapelauslage, Dreifachstapelauslage, Vierfachstapelauslage
- 501: Abgabestation, Stapelauslage
- 502: Abgabestation, Stapelauslage
- 503: Abgabestation, Stapelauslage
- 504: Abgabestation, Stapelauslage
- 505: -
- 506: Bogentransportmittel, Bogenfördersystem, Kettenfördersystem, Kettengreifersystem, nachgeordnetes, zweites

- 600: Aushärte- und Inspektionsmodul
- 601: Maschinengestell, Gestellabschnitt, erster
- 602: Maschinengestell, Gestellabschnitt, zweiter
- 603: Maschinengestell, Gestellabschnitt, dritter

- A: Richtung, Querrichtung
- T: Transportrichtung
- V: Richtung, vertikal

## Patentansprüche

1. Bogenbearbeitungsmaschine (01), wobei der Bogenbearbeitungsmaschine (01) zumindest ein für einen Transport von Bogen (02) vorgesehener Transportweg zugeordnet ist und wobei die Bogenbearbeitungsmaschine (01) zumindest eine Auftrageinrichtung (200) mit zumindest einer entlang des für den Transport von Bogen (02) vorgesehenen Transportwegs angeordneten Auftragstelle (201) zum Auftragen von Material auf Bogen (02) aufweist und wobei entlang des für den Transport von Bogen (02) vorgesehenen Transportwegs nach der zumindest einen Auftragstelle (201) zumindest eine Kühleinrichtung (301) angeordnet ist, die zumindest ein als Kühlzylinder (303) ausgebildetes Kühlelement (303) aufweist und wobei entlang des für den Transport von Bogen (02) vorgesehenen Transportwegs nach dem zumindest einen Kühlelement (303) zumindest ein erster Inspektionstransportkörper (403) angeordnet ist, auf den zumindest eine Sensoreinrichtung einer ersten Inspektionseinrichtung (401) ausgerichtet angeordnet ist, **dadurch gekennzeichnet, dass** die erste Inspektionseinrichtung (401) zumindest eine Sensoreinrichtung zur Erfassung von elektromagnetischer Strahlung im sichtbaren Bereich des Spektrums aufweist und wobei die erste Inspektionseinrichtung (401) zumindest eine Sensoreinrichtung zur Erfassung von elektromagnetischer Strahlung in einem ersten Abschnitt des Infrarotbereichs des Spektrums aufweist.

2. Bogenbearbeitungsmaschine (01) nach Anspruch 1, **dadurch gekennzeichnet, dass** der Kühlzylinder (303) zumindest ein Greifersystem (342) zum Greifen von Bogen (02) aufweist.

3. Bogenbearbeitungsmaschine (01) nach Anspruch 1 oder 2, **dadurch gekennzeichnet, dass** die Bogenbearbeitungsmaschine (01) eine Übergabestelle (311) zur Übergabe von Bogen (02) von dem als Kühlzylinder (303) ausgebildeten Kühlelement (303) an den ersten Inspektionstransportkörper (403) aufweist.

4. Bogenbearbeitungsmaschine (01) nach Anspruch 1 oder 2 oder 3, **dadurch gekennzeichnet, dass** entlang des für den Transport von Bogen (02) vorgesehenen Transportwegs nach der zumindest einen Auftragstelle (201) und vor dem zumindest einen Kühlzylinder (303) eine Aushärtevorrichtung (300) angeordnet ist.

5. Bogenbearbeitungsmaschine (01) nach Anspruch 1 oder 2 oder 3 oder 4, **dadurch gekennzeichnet, dass** die Aushärtevorrichtung (300) eine erste Aushärteeinrichtung (321) zur Trocknung einer ersten Seite von Bogen (02) und eine zweite Aushärteeinrichtung (322) zur Trocknung einer der ersten Seite gegenüberliegenden zweiten Seite von Bogen (01) aufweist.

6. Bogenbearbeitungsmaschine (01) nach Anspruch 4 oder 5, **dadurch gekennzeichnet, dass** die Aushärtevorrichtung (300) zumindest eine UV-Strahlungsquelle (302) und/oder zumindest eine LED-UV-Strahlungsquelle (302) aufweist.

7. Bogenbearbeitungsmaschine (01) nach Anspruch 4 oder 5 oder 6, **dadurch gekennzeichnet, dass** die Bogenbearbeitungsmaschine (01) ein Aushärte- und Inspektionsmodul (600) aufweist und dass das Aushärte- und Inspektionsmodul (600) die Aushärtevorrichtung (300) und das zumindest eine als Kühlzylinder (303) ausgebildete Kühlelement (303) und die zumindest eine Inspektionsvorrichtung (400) aufweist und dass das Aushärte- und Inspektionsmodul (600) ein eigenes Maschinengestell (601; 602; 603) aufweist.

8. Bogenbearbeitungsmaschine (01) nach Anspruch 1 oder 2 oder 3 oder 4 oder 5 oder 6 oder 7, **dadurch gekennzeichnet, dass** das zumindest eine Kühlelement (303) ein Leitungssystem aufweist, das zum Transport von Kühlflüssigkeit von dieser durchströmbar ist.

9. Bogenbearbeitungsmaschine (01) nach Anspruch 1 oder 2 oder 3 oder 4 oder 5 oder 6 oder 7 oder 8, **dadurch gekennzeichnet, dass** die Bogenbearbeitungsmaschine (01) zumindest eine Simultandruckeinheit (200) und/oder zumindest eine Simultan-Doppeldruckeinheit (200) aufweist.

10. Bogendruckmaschine (01), wobei der Bogendruckmaschine (01) ein für einen Transport von Bogen (02) vorgesehener Transportweg zugeordnet ist und wobei die Bogendruckmaschine (01) zumindest eine als Simultan-Doppeldruckeinheit (200) ausgebildete Auftrageinrichtung (200) mit zumindest einer entlang des für den Transport von Bogen (02) vorgesehenen Transportwegs angeordneten Auftragstelle (201) zum Auftragen von Material auf Bogen (02) aufweist und wobei entlang des für den Transport von Bogen (02) vorgesehenen Transportwegs nach der zumindest einen Auftragstelle (201) eine Aushärtevorrichtung (300) angeordnet ist, die zumindest eine LED-UV-Strahlungsquelle (302) aufweist und wobei die Aushärtevorrichtung (300) eine erste Aushärteeinrichtung (321) zur Trocknung einer ersten Seite von Bogen (02) und eine zweite Aushärteeinrichtung (322) zur Trocknung einer der ersten Seite gegenüberliegenden zweiten Seite von Bogen (01) aufweist und wobei der für den Transport von Bogen (02) vorgesehene Transportweg zwischen der ersten Aushärteeinrichtung (321) und der zweiten Aushärteeinrichtung (322) hindurch verläuft und wobei der Aushärtevorrichtung (300) zumindest eine Kühleinrichtung (301) zugeordnet ist, die zumindest ein Kühlelement (303) aufweist, das ein Leitungssystem aufweist, das zum Transport von Kühlflüssigkeit von dieser durchströmbar ist und wobei zumindest ein Aushärteabschnitt des für den Transport von Bogen (02) vorgesehenen Transportwegs durch zumindest einen Einwirkbereich der Aushärteeinrichtung (300) festgelegt ist und wobei ein Kühlabschnitt des für den Transport von Bogen (02) vorgesehenen Transportwegs durch zumindest einen Einwirkbereich des zumindest einen Kühlelements (303) festgelegt ist und wobei jeglicher Kühlabschnitt nach jeglichem Aushärteabschnitt angeordnet ist und wobei die Bogendruckmaschine (01) zumindest eine Inspektionsvorrichtung (400) aufweist, die auf einen Bereich des für den Transport von Bogen (02) vorgesehenen Transportwegs ausgerichtet angeordnet ist, der nach dem zumindest einen Kühlelement (303) angeordnet ist und wobei die zumindest eine Inspektionsvorrichtung (400) eine erste Inspektionseinrichtung (401) aufweist, **dadurch gekennzeichnet, dass** die erste Inspektionseinrichtung (401) zumindest eine Sensoreinrichtung zur Erfassung von elektromagnetischer Strahlung im sichtbaren Bereich des Spektrums aufweist und wobei die erste Inspektionseinrichtung (401) zumindest eine Sensoreinrichtung zur Erfassung von elektromagnetischer Strahlung in einem ersten Abschnitt des Infrarotbereichs des Spektrums aufweist.

11. Bogendruckmaschine (01) nach Anspruch 10, **dadurch gekennzeichnet, dass** das zumindest eine Kühlelement (303) als rotierbarer Kühlzylinder (303) ausgebildet ist.

12. Bogendruckmaschine (01) nach Anspruch 11, **dadurch gekennzeichnet, dass** der Kühlzylinder (303) zumindest ein Greifersystem (342) zum Greifen von Bogen (02) aufweist.

13. Bogendruckmaschine (01) nach Anspruch 10 oder 11 oder 12, **dadurch gekennzeichnet, dass** die Bogendruckmaschine (01) ein Aushärte- und Inspektionsmodul (600) aufweist und dass das Aushärte- und Inspektionsmodul (600) die Aushärtevorrichtung (300) und das zumindest eine Kühlelement (303) und die zumindest eine Inspektionsvorrichtung (400) aufweist und dass das Aushärte- und Inspektionsmodul (600) ein eigenes Maschinengestell (601; 602; 603) aufweist.

14. Bogendruckmaschine (01) nach Anspruch 10 oder 11 oder 12 oder 13, **dadurch gekennzeichnet, dass** die Aushärtevorrichtung (300) zumindest eine erste Aushärteeinrichtung (321) aufweist, die eine Vielzahl von LED-UV-Strahlungsquellen (302) aufweist, die auf eine Querrichtung (A) bezogen an unterschiedlichen Stellen auf den für den Transport von Substrat (02) vorgesehenen Transportweg ausgerichtet angeordnet sind.

15. Bogendruckmaschine (01) nach Anspruch 10 oder 11 oder 12 oder 13 oder 14, **dadurch gekennzeichnet, dass** die Aushärtevorrichtung (300) zumindest eine erste Aushärteeinrichtung (321) aufweist und in einer Transportrichtung (T) und/oder entlang des für den Transport von Bogen (02) vorgesehenen Transportwegs mehrere LED-UV-Strahlungsquellen (302) der zumindest einen ersten Aushärteeinrichtung (321) nacheinander angeordnet sind.

## Claims

1. Sheet-processing machine (01), wherein at least one transport path intended for a transport of sheets (02) is assigned to the sheet-processing machine (01) and wherein the sheet-processing machine (01) has at least one application unit (200) with at least one application point (201) arranged along the transport path intended for the transport of sheets (02) for applying material onto sheets (02) and wherein, along the transport path intended for the transport of sheets (02), after the at least one application point (201), at least one cooling unit (301) is arranged which has at least one cooling element (303) configured as a cooling cylinder (303) and wherein, along the transport path intended for the transport of sheets (02), after the at least one cooling element (303), at least one first inspection transport body (403) is arranged, onto which at least one sensor unit of a first inspection unit (401) is arranged in an aligned manner, **characterized in that** the first inspection unit (401) has at least one sensor unit for detecting electromagnetic radiation in the visible range of the spectrum and wherein the first inspection unit (401) has at least one sensor unit for detecting electromagnetic radiation in a first section of the infrared range of the spectrum.

2. Sheet-processing machine (01) according to Claim 1, **characterized in that** the cooling cylinder (303) has at least one gripper system (342) for gripping sheets (02).

3. Sheet-processing machine (01) according to Claim 1 or 2, **characterized in that** the sheet-processing machine (01) has a transfer point (311) for transferring sheets (02) from the cooling element (303) configured as a cooling cylinder (303) to the first inspection transport body (403).

4. Sheet-processing machine (01) according to Claim 1 or 2 or 3, **characterized in that**, along the transport path intended for the transport of sheets (02), after the at least one application point (201) and before the at least one cooling cylinder (303), a curing device (300) is arranged.

5. Sheet-processing machine (01) according to Claim 1 or 2 or 3 or 4, **characterized in that** the curing device (300) has a first curing unit (321) for drying a first side of sheets (02) and a second curing unit (322) for drying a second side of sheets (01) opposite the first side.

6. Sheet-processing machine (01) according to Claim 4 or 5, **characterized in that** the curing device (300) has at least one UV radiation source (302) and/or at least one LED UV radiation source (302).

7. Sheet-processing machine (01) according to Claim 4 or 5 or 6, **characterized in that** the sheet-processing machine (01) has a curing and inspection module (600) and **in that** the curing and inspection module (600) has the curing device (300) and the at least one cooling element (303) configured as a cooling cylinder (303) and the at least one inspection device (400) and **in that** the curing and inspection module (600) has its own machine frame (601; 602; 603).

8. Sheet-processing machine (01) according to Claim 1 or 2 or 3 or 4 or 5 or 6 or 7, **characterized in that** the at least one cooling element (303) has a line system which can be flowed through by cooling liquid for the transport of said cooling liquid.

9. Sheet-processing machine (01) according to Claim 1 or 2 or 3 or 4 or 5 or 6 or 7 or 8, **characterized in that** the sheet-processing machine (01) has at least one simultaneous printing unit (200) and/or at least one simultaneous double printing unit (200).

10. Sheet-fed printing machine (01), wherein a transport path intended for a transport of sheets (02) is assigned to the sheet-fed printing machine (01) and wherein the sheet-fed printing machine (01) has at least one application unit (200) configured as a simultaneous double printing unit (200) with at least one application point (201) arranged along the transport path intended for the transport of sheets (02) for applying material onto sheets (02) and wherein, along the transport path intended for the transport of sheets (02), after the at least one application point (201), a curing device (300) is arranged which has at least one LED UV radiation source (302) and wherein the curing device (300) has a first curing unit (321) for drying a first side of sheets (02) and a second curing unit (322) for drying a second side of sheets (01) opposite the first side and wherein the transport path intended for the transport of sheets (02) runs through between the first curing unit (321) and the second curing unit (322) and wherein at least one cooling unit (301) is assigned to the curing device (300), which cooling unit has at least one cooling element (303) which has a line system which can be flowed through by cooling liquid for the transport of said cooling liquid and wherein at least one curing section of the transport path intended for the transport of sheets (02) is defined by at least one action region of the curing unit (300) and wherein a cooling section of the transport path intended for the transport of sheets (02) is defined by at least one action region of the at least one cooling element (303) and wherein any cooling section is arranged after any curing section and wherein the sheet-fed printing machine (01) has at least one inspection device (400) which is arranged aligned onto a region of the transport path intended for the transport of sheets (02) which is arranged after the at least one cooling element (303) and wherein the at least one inspection device (400) has a first inspection unit (401), **characterized in that** the first inspection unit (401) has at least one sensor unit for detecting electromagnetic radiation in the visible range of the spectrum and wherein the first inspection unit (401) has at least one sensor unit for detecting electromagnetic radiation in a first section of the infrared range of the spectrum.

11. Sheet-fed printing machine (01) according to Claim 10, **characterized in that** the at least one cooling element (303) is configured as a rotatable cooling cylinder (303).

12. Sheet-fed printing machine (01) according to Claim 11, **characterized in that** the cooling cylinder (303) has at least one gripper system (342) for gripping sheets (02).

13. Sheet-fed printing machine (01) according to Claim 10 or 11 or 12, **characterized in that** the sheet-fed printing machine (01) has a curing and inspection module (600) and **in that** the curing and inspection module (600) has the curing device (300) and the at least one cooling element (303) and the at least one inspection device (400) and **in that** the curing and inspection module (600) has its own machine frame (601; 602; 603).

14. Sheet-fed printing machine (01) according to Claim 10 or 11 or 12 or 13, **characterized in that** the curing device (300) has at least one first curing unit (321) which has a plurality of LED UV radiation sources (302) which are arranged aligned onto the transport path intended for the transport of substrate (02) at different locations with respect to a transverse direction (A).

15. Sheet-fed printing machine (01) according to Claim 10 or 11 or 12 or 13 or 14, **characterized in that** the curing device (300) has at least one first curing unit (321) and, in a transport direction (T) and/or along the transport path intended for the transport of sheets (02), several LED UV radiation sources (302) of the at least one first curing unit (321) are arranged one after another.

## Revendications

1. Machine de traitement de feuilles (01), dans laquelle au moins un trajet de transport prévu pour un transport de feuilles (02) est associé à la machine de traitement de feuilles (01) et dans laquelle la machine de traitement de feuilles (01) présente au moins une unité d'application (200) avec au moins un point d'application (201) disposé le long du trajet de transport prévu pour le transport de feuilles (02) pour appliquer du matériau sur des feuilles (02) et dans laquelle, le long du trajet de transport prévu pour le transport de feuilles (02), après le au moins un point d'application (201), au moins une unité de refroidissement (301) est disposée, laquelle présente au moins un élément de refroidissement (303) réalisé sous forme de cylindre de refroidissement (303) et dans laquelle, le long du trajet de transport prévu pour le transport de feuilles (02), après le au moins un élément de refroidissement (303), au moins un premier corps de transport d'inspection (403) est disposé, vers lequel au moins une unité de capteur d'une première unité d'inspection (401) est disposée de manière orientée, **caractérisée en ce que** la première unité d'inspection (401) présente au moins une unité de capteur pour la détection d'un rayonnement électromagnétique dans la plage visible du spectre et dans laquelle la première unité d'inspection (401) présente au moins une unité de capteur pour la détection d'un rayonnement électromagnétique dans une première section de la plage infrarouge du spectre.

2. Machine de traitement de feuilles (01) selon la revendication 1, **caractérisée en ce que** le cylindre de refroidissement (303) présente au moins un système de pinces (342) pour la saisie de feuilles (02).

3. Machine de traitement de feuilles (01) selon la revendication 1 ou 2, **caractérisée en ce que** la machine de traitement de feuilles (01) présente un poste de transfert (311) pour le transfert de feuilles (02) depuis l'élément de refroidissement (303) réalisé sous forme de cylindre de refroidissement (303) vers le premier corps de transport d'inspection (403).

4. Machine de traitement de feuilles (01) selon la revendication 1 ou 2 ou 3, **caractérisée en ce que**, le long du trajet de transport prévu pour le transport de feuilles (02), après le au moins un point d'application (201) et avant le au moins un cylindre de refroidissement (303), un dispositif de durcissement (300) est disposé.

5. Machine de traitement de feuilles (01) selon la revendication 1 ou 2 ou 3 ou 4, **caractérisée en ce que** le dispositif de durcissement (300) présente une première unité de durcissement (321) pour le séchage d'une première face de feuilles (02) et une seconde unité de durcissement (322) pour le séchage d'une seconde face de feuilles (01) opposée à la première face.

6. Machine de traitement de feuilles (01) selon la revendication 4 ou 5, **caractérisée en ce que** le dispositif de durcissement (300) présente au moins une source de rayonnement UV (302) et/ou au moins une source de rayonnement UV à LED (302).

7. Machine de traitement de feuilles (01) selon la revendication 4 ou 5 ou 6, **caractérisée en ce que** la machine de traitement de feuilles (01) présente un module de durcissement et d'inspection (600) et **en ce que** le module de durcissement et d'inspection (600) présente le dispositif de durcissement (300) et le au moins un élément de refroidissement (303) réalisé sous forme de cylindre de refroidissement (303) et le au moins un dispositif d'inspection (400) et **en ce que** le module de durcissement et d'inspection (600) présente un bâti de machine propre (601; 602; 603).

8. Machine de traitement de feuilles (01) selon la revendication 1 ou 2 ou 3 ou 4 ou 5 ou 6 ou 7, **caractérisée en ce que** le au moins un élément de refroidissement (303) présente un système de conduites qui peut être traversé par du liquide de refroidissement pour le transport de ce liquide de refroidissement.

9. Machine de traitement de feuilles (01) selon la revendication 1 ou 2 ou 3 ou 4 ou 5 ou 6 ou 7 ou 8, **caractérisée en ce que** la machine de traitement de feuilles (01) présente au moins une unité d'impression simultanée (200) et/ou au moins une unité d'impression double simultanée (200).

10. Machine d'impression de feuilles (01), dans laquelle un trajet de transport prévu pour un transport de feuilles (02) est associé à la machine d'impression de feuilles (01) et dans laquelle la machine d'impression de feuilles (01) présente au moins une unité d'application (200) réalisée sous forme d'unité d'impression double simultanée (200) avec au moins un point d'application (201) disposé le long du trajet de transport prévu pour le transport de feuilles (02) pour appliquer du matériau sur des feuilles (02) et dans laquelle, le long du trajet de transport prévu pour le transport de feuilles (02), après le au moins un point d'application (201), un dispositif de durcissement (300) est disposé, lequel présente au moins une source de rayonnement UV à LED (302) et dans laquelle le dispositif de durcissement (300) présente une première unité de durcissement (321) pour le séchage d'une première face de feuilles (02) et une seconde unité de durcissement (322) pour le séchage d'une seconde face de feuilles (01) opposée à la première face et dans laquelle le trajet de transport prévu pour le transport de feuilles (02) passe entre la première unité de durcissement (321) et la seconde unité de durcissement (322) et dans laquelle au moins une unité de refroidissement (301) est associée au dispositif de durcissement (300), laquelle présente au moins un élément de refroidissement (303) qui présente un système de conduites qui peut être traversé par du liquide de refroidissement pour le transport de ce liquide de refroidissement et dans laquelle au moins une section de durcissement du trajet de transport prévu pour le transport de feuilles (02) est définie par au moins une zone d'action de l'unité de durcissement (300) et dans laquelle une section de refroidissement du trajet de transport prévu pour le transport de feuilles (02) est définie par au moins une zone d'action du au moins un élément de refroidissement (303) et dans laquelle toute section de refroidissement est disposée après toute section de durcissement et dans laquelle la machine d'impression de feuilles (01) présente au moins un dispositif d'inspection (400) qui est disposé de manière orientée vers une zone du trajet de transport prévu pour le transport de feuilles (02) qui est disposée après le au moins un élément de refroidissement (303) et dans laquelle le au moins un dispositif d'inspection (400) présente une première unité d'inspection (401), **caractérisée en ce que** la première unité d'inspection (401) présente au moins une unité de capteur pour la détection d'un rayonnement électromagnétique dans la plage visible du spectre et dans laquelle la première unité d'inspection (401) présente au moins une unité de capteur pour la détection d'un rayonnement électromagnétique dans une première section de la plage infrarouge du spectre.

11. Machine d'impression de feuilles (01) selon la revendication 10, **caractérisée en ce que** le au moins un élément de refroidissement (303) est réalisé sous forme de cylindre de refroidissement rotatif (303).

12. Machine d'impression de feuilles (01) selon la revendication 11, **caractérisée en ce que** le cylindre de refroidissement (303) présente au moins un système de pinces (342) pour la saisie de feuilles (02).

13. Machine d'impression de feuilles (01) selon la revendication 10 ou 11 ou 12, **caractérisée en ce que** la machine d'impression de feuilles (01) présente un module de durcissement et d'inspection (600) et **en ce que** le module de durcissement et d'inspection (600) présente le dispositif de durcissement (300) et le au moins un élément de refroidissement (303) et le au moins un dispositif d'inspection (400) et **en ce que** le module de durcissement et d'inspection (600) présente un bâti de machine propre (601; 602; 603).

14. Machine d'impression de feuilles (01) selon la revendication 10 ou 11 ou 12 ou 13, **caractérisée en ce que** le dispositif de durcissement (300) présente au moins une première unité de durcissement (321) qui présente une pluralité de sources de rayonnement UV à LED (302) qui sont disposées de manière orientée vers le trajet de transport prévu pour le transport de substrat (02) à différents emplacements par rapport à une direction transversale (A).

15. Machine d'impression de feuilles (01) selon la revendication 10 ou 11 ou 12 ou 13 ou 14, **caractérisée en ce que** le dispositif de durcissement (300) présente au moins une première unité de durcissement (321) et, dans une direction de transport (T) et/ou le long du trajet de transport prévu pour le transport de feuilles (02), plusieurs sources de rayonnement UV à LED (302) de la au moins une première unité de durcissement (321) sont disposées les unes après les autres.
